(19) Europäisches Patentamt
European Patent Office
Office européen des brevets

(11) EP 3 093 379 B1

(12) **EUROPEAN PATENT SPECIFICATION**

(45) Date of publication and mention
of the grant of the patent:
**01.05.2019 Bulletin 2019/18**

(21) Application number: **15735361.6**

(22) Date of filing: **06.01.2015**

(51) Int Cl.:
*D01F 6/60* (2006.01)        *D01F 6/80* (2006.01)
*B60C 9/00* (2006.01)        *D02G 3/48* (2006.01)
*C08G 69/26* (2006.01)

(86) International application number:
**PCT/JP2015/050167**

(87) International publication number:
**WO 2015/105104 (16.07.2015 Gazette 2015/28)**

(54) **POLYAMIDE MULTIFILAMENT FIBER AND TIRE CORD INCLUDING SAID FIBER**

MULTIFILE POLYAMIDFASER UND REIFENCORD MIT DIESER FASER

FIBRE DE POLYAMIDE MULTIFILAMENT ET CÂBLE DE PNEUMATIQUE COMPRENANT LADITE FIBRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.01.2014 JP 2014001582
08.01.2014 JP 2014001602
04.06.2014 JP 2014115639**

(43) Date of publication of application:
**16.11.2016 Bulletin 2016/46**

(73) Proprietor: **Asahi Kasei Kabushiki Kaisha
Tokyo 100-0006 (JP)**

(72) Inventors:
• **SATO, Yusuke
Tokyo 101-8101 (JP)**

• **NAYUKI, Ryo
Tokyo 101-8101 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(56) References cited:
**WO-A1-2013/024593        JP-A- S6 170 008
JP-A- H05 156 513        JP-A- 2011 052 361
JP-A- 2013 127 059        US-A- 3 827 998**

**Description**

TECHNICAL FIELD

The present invention relates to a polyamide multifilament yarn having a high glass transition temperature (Tg), high strength as well as superior spinning stability and fiber uniformity, a tire cord including that yarn, which has superior rubber adhesion properties and inhibits the formation of tire flat spots, and a tire including that tire cord.

BACKGROUND ART

Current automobile tires can be broadly classified into bias tires and radial tires. Bias tires refers to tires in which the cords that compose the carcass are arranged so as to cross at an angle relative to the center line of the tread, while radial tires refer to tires in which the cords that compose the carcass are arranged at a right angle to the center line of the tread, and have a steel belt arranged on the outside of the carcass to reinforce the tread. Since radial tires are superior to bias tires with respect to such parameters as maneuverability, straight running stability, wear resistance and low rolling resistance, radial tires have recently come to be installed on nearly all passenger cars.

Cords referred to as cap ply are further arranged on the outer layer of the steel belt of radial tires in parallel to the circumferential direction of the tire. The cap ply serves as an intermediary between the steel and tread rubber, and fulfills the role of improving adhesion and preventing peeling when running at high speeds. In addition, it also functions to inhibit deformation by firming up tires that have expanded at high speeds and high temperatures.

Cords using Nylon 66 fibers are currently used nearly exclusively for cap ply cords. This is because Nylon 66 fibers have superior rubber adhesion properties required for use as cap ply cords and demonstrate tire-firming effects attributable to thermal contraction, while also demonstrating a favorable balance between strength and heat resistance and the like. However, tires using Nylon 66 fibers for the cap ply are susceptible to the occurrence of deformations referred to as flat spots caused by sudden temperature changes attributable to driving or parking, while also having problems with respect to increased rolling resistance and straight running stability. In addition, flat spots also result in poor fuel consumption and ride quality. Accompanying recent improvements in automobile performance, there is a growing demand for improved straight running stability, resulting in the need for a tire cord that improves flat spots.

Examples of fibers used in tire cords made of materials other than Nylon 66 include those made of polyethylene terephthalate (PET), polyethylene naphthalate (PEN) and aramid. However, fibers made of PET or PEN have poor rubber adhesion properties, require two rounds of adhesive coating treatment while Nylon 66 fibers only require one round, and tend to result in increased processing costs and increased costs attributable to equipment restrictions. In addition, there is also the problem of low heat-resistant adhesiveness caused by deterioration attributable to ammonia, amines and moisture generated from the rubber compound at high temperatures as well as deterioration of adhesive bonding with the rubber.

Aramid fibers also have poor rubber adhesion properties, required two rounds of adhesive coating treatment and have the problem of increased costs. Moreover, since aramid fibers undergo little elongation during vulcanization, in the case of using these cords in a cap ply, the cap play ends up eating into the belt of the tire following vulcanization, thereby causing separation of the belt ends.

In addition, technologies for using composite cords composed of aramid fibers and Nylon 66 fibers for the cap ply are disclosed in the following Patent Documents 1 and 2. However, rubber adhesion properties are reduction of the formation of flat spots are still inadequate in comparison with the case of using cords composed of Nylon 66 fibers only.

Moreover, the following Patent Document 3 discloses a polyamide multifilament fiber composed of 1,4-cyclohexanedicarboxylic acid and 2-methylpentamethylenediamine. This fiber is an aliphatic polyamide in the same manner as Nylon 66 fibers, is presumed to demonstrate favorable rubber adhesion properties, and has the potential to be a superior fiber for use as a tire cord. However, the fiber described in Patent Document 3 is a monofilament fiber. In order to use as a tire cord, a multifilament fiber is required that has superior uniformity from the viewpoints of resistance to fatigue caused by repeated bending motion, rubber adhesion properties and the like. Therefore, although studies were conducted on the production of a multifilament fiber, in the fiber described in Patent Document 3, a multifilament fiber having high levels of strength and uniformity was unable to be obtained due to poor spinnability caused by thermal decomposition attributable to the high melting point of the polymer and inadequate thermal stability during melting.

In this manner, although there is a need for a tire cord that inhibits flat spots while having high rubber adhesion properties similar to Nylon 66, a fiber that satisfies this need has yet to be provided.

Prior Art Documents

Patent Documents

Patent Document 1: Japanese Unexamined Patent Publication (Kokai) No. H1-247204
Patent Document 2: Japanese Unexamined Patent Publication (KOkai) No. 2001-63310
Patent Document 3: Japanese Unexamined Patent Publication (KOkai) No. 2011-52361

DISCLOSURE OF THE INVENTION

Problems to be Solved by the Invention

With the foregoing in view, an object of the present invention is to provide a tire cord that has superior rubber adhesion properties and inhibits the formation of tire flat spots, and a polyamide multifilament yarn that composes the tire cord having superior strength, spinning stability and fiber uniformity.

Means for Solving the Problems

As a result of conducting extensive studies and repeated experiments to solve the aforementioned problems, the inventors of the present invention conjectured that flat spots are caused by a change in rigidity of the tire cords attributable to a change in tire temperature, and found that flat spots can be inhibited by using a tire cord composed of polyamide multifilament yarns having a high Tg and a small difference in rigidity between that at normal temperatures and that at high temperatures. In addition, since the polyamide multifilament yarn also has favorable rubber adhesion properties attributable to amide bonds, it is able to realize both inhibition of flat spots and tire processability. In addition, the inventors of the present invention found that a polyamide multifilament yarn can be obtained, which has high strength despite having a high Tg while also demonstrating superior spinning stability and filament uniformity, by using polyamide obtained by copolymerizing a dicarboxylic acid component having an alicyclic dicarboxylic acid, and a diamine component at a specific ratio and spinning under specific conditions. The inventors of the present invention completed the present invention based on these findings.

Namely, the present invention is as indicated below.

[1] A polyamide multifilament yarn comprising a polycondensate of a dicarboxylic acid component having an alicyclic dicarboxylic acid, and a diamine, which satisfies the following requirements;

(a) the ratio of the alicyclic dicarboxylic acid to the entire dicarboxylic acid component is 50 mol% or more;
(b) the total fineness of the polyamide multifilament yarn is 100 dtex or more;
(c) the cross ratio (maximum diameter/minimum diameter) of the polyamide multifilament yarn, measured as described in the description, is 1.6 or less;
(d) the melting point (Tm) of the polyamide multifilament yarn is 270°C to 350°C, and
(e) the ratio of aromatic diamine to the entire diamine is 0 mol% to 10 mol%,
(f) the ratio of aromatic dicarboxylic acid to the entire dicarboxylic acid is 0 mol% to 10 mol%,
wherein the value of the ratio of the storage elastic modulus at 120°C (E'(120°C)) to the storage elastic modulus at 25°C (E' (25°C)), measured as described in the description, is 0.6 to 0.9. [1] or [2] above, which contains 1,10-decanediamine for the diamine component, and the ratio of the 1,10-decanediamine to the entire diamine component is 20 mol% or more.

[4] The polyamide multifilament yarn described in in any of [1] to [3] above, which contains a diamine having 5 or 6 carbon atoms for the diamine component, and the ratio of the diamine having 5 or 6 carbon atoms to the entire diamine component is 20 mol% or more.
[5] The polyamide multifilament yarn described in [4] above, wherein the diamine having 5 or 6 carbon atoms is 2-methylpentamethylenediamine.
[6] The polyamide multifilament yarn described in described in [4] above, wherein the diamine having 5 or 6 carbon atoms is hexamethylenediamine.
[7] The polyamide multifilament yarn described in any of [1] to [6] above, wherein the glass transition temperature (Tg) thereof is 90°C to 190°C.
[8] The polyamide multifilament yarn described in any of [1] to [7] above, wherein U% is 3.0 or less.

[9] The polyamide multifilament yarn described in any of [1] to [8] above, wherein Δn is 0.04 or more.

[10] The polyamide multifilament yarn described in any of [1] to [9] above, wherein the number of filaments is 30 filaments of more.

[11] The polyamide multifilament yarn described in any of [1] to [10] above, wherein filament fineness thereof is 7.0 dtex or less.

[12] The polyamide multifilament yarn described in any of [1] to [11] above, wherein the fiber strength thereof is 4 cN/dtex or more.

[13] The polyamide multifilament yarn described in any of [1] to [12] above, which contains 1,4-cyclohexanedicarboxylic acid for the aliphatic dicarboxylic acid, and the ratio of the trans isomer derived from the 1,4-cyclohexanedicarboxylic acid is 50% to 100%.

[14] The polyamide multifilament yarn described in any of [1] to [13] above, wherein the peak temperature of the loss tangent (tanδ) is 150°C to 200°C.

[15] The polyamide multifilament yarn described in any of [1] to [14] above, which is treated with a resorcin-formalin-latex resin.

[16] A tire cord comprising the polyamide multifilament yarn described in any of [1] to [15] above.

[17] A twisted cord composed of the polyamide multifilament yarn described in any of [1] to [14] above.

[18] The twisted cord described in [17] above, which is treated with a resorcin-formalin-latex resin.

[19] A twisted cord composed of the polyamide multifilament yarn described in [15] above.

[20] A cord fabric composed of the polyamide multifilament fiber described in any of [1] to [14] above or the twisted cord described in [17] above.

[21] The cord fabric described in [20] above, which is treated with a resorcin-formalin-latex resin.

[22] A cord fabric composed of the polyamide multifilament yarn described in [15] above or the cord described in [18] or [19] above.

[23] A tire including the polyamide multifilament yarn described in any of [1] to [15] above, the cord described in any of [16] to [19] above, or the cord fabric described in any of [20] to [22] above.

[24] The tire described in [23] above, wherein the polyamide multifilament yarn described in any of [1] to [15] above, the cord described in any of [17] to [20] above, or the cord fabric described in any of [20] to [22] above is applied to a cap ply.

Effect of the Invention

The polyamide multifilament yarn of the present invention has a high Tg and high strength and demonstrates superior spinning stability and filament uniformity, and a tire cord using this fiber has superior rubber adhesion properties and is able to impart favorable dimensional stability to the tire at high temperatures.

BRIEF DESCRIPTION OF THE DRAWINGS

FIG. 1 is a drawing for explaining unevenness U%.
FIG. 2 is a drawing for explaining spinning equipment.

EMBODIMENTS FOR CARRYING OUT THE INVENTION

The following provides a detailed explanation of modes for carrying out the invention (to be referred to as embodiments). The present invention is not limited to the following embodiments and can be modified in various ways within the scope of the claims.

The polyamide multifilament yarn of the present invention is a polyamide multifilament yarn comprising a polycondensate of a dicarboxylic acid component having an alicyclic dicarboxylic acid, and a diamine component, which satisfies the requirements indicated in appended claim 1.

The polyamide multifilament yarn of the present embodiment is composed of a polyamide obtained by polycondensation of a dicarboxylic acid component containing an alicyclic dicarboxylic, at a ratio of alicyclic dicarboxylic acid to the entire dicarboxylic acid component of 50 mol% or more, and a diamine component. As a result, increasing fiber Tg can be achieved, and the shortcoming of Nylon 66 fibers of a decrease in rigidity at high temperatures can be inhibited considerably. In addition, since the polyamide is an aliphatic polyamide and has amide bonds, the rubber adhesion properties thereof are extremely superior. Moreover, in comparison with polyamides containing structural units derived from ordinary aromatics used as heat-resistant polyamides, molecular weight can be increased while maintaining favorable fluidity, thereby allowing the obtaining of yarn having superior fiber strength.

Polyamides refer to polymers having amide bonds (-NHCO-) in their main chain. In addition, the "ratio of the alicyclic dicarboxylic acid to the entire dicarboxylic acid component is 50 mol% or more" means that the "ratio of the structural unit derived from an alicyclic dicarboxylic acid to a structural unit derived from the raw material monomer component is 25 mol% or more". The following provides an explanation of monomer components of the polyamide multifilament yarn.

[Dicarboxylic Acid]

As was previously described, the polyamide multifilament yarn of the present embodiment is a polyamide multifilament yarn comprising a polycondensates of a dicarboxylic acid component having an alicyclic dicarboxylic acid, and a diamine component, and the ratio of the alicyclic dicarboxylic acid to the entire dicarboxylic acid is at least 50 mol% or more, preferably 60 mol% or more, more preferably 70 mol% or more, even more preferably 80 mol% or more, and most preferably 100 mol%. As a result of containing at least 50 mol% or more of a structural unit derived from an alicyclic dicarboxylic acid, a polyamide multifilament yarn can be obtained that has a high Tg, high fiber strength and superior spinnability.

The alicyclic carboxylic acid is not limited to those indicated below, and examples thereof include alicyclic dicarboxylic acids in which the number of carbon atoms of the alicyclic structure is 3 to 10, and preferably include alicyclic dicarboxylic acids in which the number of carbon atoms of the alicyclic structure is 5 to 10. Specific examples thereof include, but are not limited to, 1,4-cyclohexanedicarboxylic acid, 1,3-cyclohexanedicarboxylic acid and 1,3-cyclopentanedicarboxylic acid.

The alicyclic dicarboxylic acid may be unsubstituted or have substituents. Examples of substituents include, but are not limited to, alkyl groups having 1 to 4 carbon atoms such as a methyl group, ethyl group, n-propyl group, isopropyl group, n-butyl group, isobutyl group or tert-butyl group.

The alicyclic dicarboxylic acid is preferably 1,4-cyclohexanedicarboxylic acid from the viewpoints of heat resistance, dimensional stability and strength of the polyamide multifilament yarn.

The alicyclic dicarboxylic acid may be used alone or two or more types may be used in combination.

Alicyclic dicarboxylic acids have geometrical isomers consisting of a trans form and cis form. For example, a raw material monomer in the form of 1,4-cyclohexanedicarboxylic acid may be used in either the trans form or cis form, or may be used as a mixture of the trans form and cis form at various ratios. Since 1,4-cyclohexanedicarboxylic acid isomerizes to a constant ratio at high temperatures, and the cis form has higher solubility of an equivalent amount of salt with diamines in comparison with the trans form, the ratio of trans isomer in the raw material monomer, namely the molar ratio of the trans form/cis form, is preferably 50/50 to 0/100, more preferably 40/60 to 10/90, and even more preferably 35/65 to 15/85. As a result of the ratio of the trans isomer being within the aforementioned ranges, the polyamide not only has superior properties in terms of high melting point, tenacity and strength, but is also able to simultaneously satisfy the requirements of high glass transition temperature, fluidity, which is a property that normally reciprocal to heat resistance, and high crystallinity. The molar ratio of the trans form to the cis form of 1,4-cyclohexanedicarboxylic acid can be determined by high-performance liquid chromatography (HPLC) or nuclear magnetic resonance spectroscopy (NMR).

Examples of dicarboxylic acids other than alicyclic dicarboxylic acids include, but are not limited to, linear or branched aliphatic dicarboxylic acids having 3 to 20 carbon atoms such as malonic acid, dimethylmalonic acid, succinic acid, 2,2-dimethylsuccinic acid, 2,3-dimethylglutaric acid, 2,2-diethylsuccinic acid, 2,3-diethylglutaric acid, glutaric acid, 2,2-dimethylglutaric acid, adipic acid, 2-methyladipic acid, trimethyladipic acid, pimelic acid, suberic acid, azelaic acid, sebacic acid, dodecanedioic acid, tetradecanedioic acid, hexadecanedioic acid, octadecanedioic acid, eicosanedioic acid or diglycolic acid.

In addition, an aromatic dicarboxylic acid may be added to the aforementioned dicarboxylic acid within a range that does not inhibit the fluidity of polyamide in which the ratio of aromatic dicarboxylic acid to dicarboxylic acid is 0 mol% to 10 mol%. Examples of aromatic carboxylic acids include, but are not limited to, aromatic dicarboxylic acids having 8 to 20 carbon atoms that are unsubstituted or substituted with various substituents, such as terephthalic acid, isophthalic acid, naphthalenedicarboxylic acid, 2-chloroterephthalic acid, 2-methylterephthalic acid, 5-methylisophthalic acid or sodium 5-sulfoisophthalate. An alicyclic dicarboxylic acid is included in the dicarboxylic acid at a ratio of at least 50 mol% or more, dicarboxylic acids other than those indicated above may also be included provided they do not impair the desired action and effects.

[Diamine]

From the viewpoints of spinning stability, heat resistance and low moisture absorption, the polyamide multifilament yarn of the present embodiment contains 1,10-decamethylenediamine as a diamine component, the ratio of 1,10-decamethylenediamine to the entire diamine component is preferably 20 mol% or more. The ratio of 1,10-decamethyenediamine to the entire diamine component is preferably at least 20 mol% or more, more preferably 30 mol% to 80 mol%, even more preferably 40 mol% to 75 mol%, and still more preferably 45 mol% to 70 mol%.

In general, polymers having a high Tg tend to have a higher melting point. In the case the melting point is excessively high, the polyamide undergoes thermal decomposition during melting, demonstrates decreases in molecular weight and strength, the polyamide becomes colored, and spinnability becomes poor due to soiling by decomposition gas. However, as a result of containing 1,10-decamethylenediamine at 20 mol% to 80 mol%, melting point can be held to that suitable for melt spinning while maintaining a high Tg. In addition, since polyamide containing 1,10-decamethylenediamine demonstrates high thermal stability during melting, a multifilament fiber can be obtained that has superior spinning stability and favorable uniformity. In addition, lowering of the amide group concentration in the polyamide makes it possible to obtain yarn having superior dimension stability during moisture absorption. Moreover, 1,10-decamethylenediamine is also preferable from the viewpoint of being a raw material derived from biomass.

There are no particular limitations on diamines other than 1,10-decamethylenediamine, may be unsubstituted linear aliphatic diamines, and examples thereof include branched aliphatic diamines or alicyclic diamines having substituents such as alkyl groups having 1 to 4 carbon atoms in the manner of a methyl group, ethyl group, n-propyl group, isopropyl group, n-butyl group, isobutyl group or tert-butyl group.

Examples of diamines other than 1,10-decamethylenediamine include, but are not limited to, linear aliphatic diamines such as ethylenediamine, propylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine or tridecamethylenediamine, 2-methylpentamethylenediamine, 2,2,4-trimethylhexamethyenediamine, 2-methyloctamethylenediamine, 2,4-dimethyloctamethylenediamine, 1,4-cyclohexanediamine, 1,3-cyclohexanediamine and 1,3-cyclopentanediamine.

In addition, an aromatic diamine may be added to the diamine within a range that does not impair fluidity of a polyamide in which the ratio of aromatic diamine to diamine is 0 mol% to 10 mol%. Aromatic diamines refer to diamines containing an aromatic, there are no particular limitations thereon, and examples thereof include meta-xylylenediamine, ortho-xylylenediamine and para-xylylenediamine.

Diamines other than 1,10-decamethylenediamine include diamines having 5 to 6 carbon atoms, and the ratio of diamine having 5 to 6 carbon atoms is more preferably 20 mol% or more. Copolymerization of diamines having 5 to 6 carbon atoms other than 1,10-decamethylenediamine makes it possible to obtain a polymer having high crystallinity while maintaining a suitable melting point suitable for spinning. Examples of diamines having 5 to 6 carbon atoms include pentamethylenediamine, hexamethylenediamine, 2-methylpentamethylenediamine, 2,5-dimethylhexanediamine and 2,2,4-trimethylhexamethylenediamine.

Among diamines having 5 to 6 carbon atoms, 2-methylpentamethylenediamine is preferable from the viewpoints of spinnability, fluidity and strength. Since the 2-methylpentamethylenediamine can undergo self-cyclization if the ratio thereof is excessively high, thereby causing decomposition and a decrease in molecular weight during melting, spinnability and strength become poor. The ratio of 2-methylpentamethylenediamine in the diamine is required to be set within a range that does not cause the occurrence of decomposition during melting while ensuring fluidity, and is preferably 20 mol% to 70 mol%, more preferably 20 mol% to 60 mol%, and even more preferably 20 mol% to 55 mol%.

In addition, among diamines having 5 to 6 carbon atoms, hexamethylenediamine is preferable from the viewpoint of heat resistance of the polyamide multifilament fiber. Since the melting point becomes excessively high resulting in difficulty during spinning if the ratio of hexamethylenediamine is excessively high, the ratio of hexamethylenediamine in the diamine is preferably 20 mol% to 60 mol%, more preferably 20 mol% to 50 mol%, and even more preferably 20 mol% to 45 mol%.

The added amount of dicarboxylic acid and the added amount of diamine are preferably in the vicinity of equal molar amounts in order to increase molecular weight. When also considering the portion of the diamine that escapes outside the reaction system during the polymerization reaction with respect to the molar ratio, the total molar amount of diamine is preferably 0.90 to 1.20, more preferably 0.95 to 1.10, and even more preferably 0.98 to 1.05 based on a total molar amount of dicarboxylic acid of 1.00.

[Lactam and/or Aminocarboxylic Acid]

The polyamide multifilament yarn used in the tire cord of the present embodiment may also contain a component derived from a lactam and/or aminocarboxylic acid within a range that does not impair the desired action and effects.

There are no particular limitations on the aforementioned lactams, and examples thereof include butyrolactam, pivalolactam, ε-caprolactam, caprylolactam, enantolactam, undecanolactam and laurolactam (dodecanolactam).

There are no particular limitations on the aminocarboxylic acids, they are preferably linear or branched saturated aliphatic carboxylic acids having 4 to 14 carbon atoms substituted with an amino group at the ω position, preferable examples thereof include 6-aminocaproic acid, 11-aminoundecanoic acid and 12-aminododecanoic acid, and a specific example of an aminocarboxylic acid is para-aminomethylbenzoic acid.

There are no particular limitations on the ratio of components derived from lactams and/or aminocarboxylic acids, and the ratio of components derived from lactams and/or aminocarboxylic acids to structural units derived from the raw material monomer component is preferably 0 mol% to 20 mol% and more preferably 2 mol% to 15 mol%. As a result of making the ratio of components derived from lactams and/or aminocarboxylic acids to be 0 mol% to 20 mol%, a polyamide multifilament fiber can be obtained that has superior heat resistance, spinnability and strength.

During polymerization of the polyamide from the dicarboxylic acid and diamine, a known end-capping agent can be added to adjust molecular weight. Examples of end-capping agents include monocarboxylic acids, monoamines, acid anhydrides such as phthalic anhydride, monoisocyanates, acid monohalides, monoesters and monoalcohols, and monocarboxylic acids and monoamines are preferable from the viewpoint of thermal stability. One type of end-capping agent may be used alone or two or more types may be used in combination.

There are no particular limitations on the monocarboxylic acid used as an end-capping agent provided it has reactivity with amino groups, and examples thereof include aliphatic monocarboxylic acids such as formic acid, acetic acid, propionic acid, butyric acid, valeric acid, caproic acid, caprylic acid, lauric acid, tridecylic acid, myristic acid, palmitic acid, stearic acid, pivalic acid or isobutylic acid; and, aromatic monocarboxylic acids such as benzoic acid, toluic acid, α-naphthalenecarboxylic acid, β-naphthalenecarboxylic acid, methylnaphthalenecarboxylic acid or phenylacetic acid.

One type of monocarboxylic acid may be used as an end-capping agent or two or more types may be used in combination.

There are no particular limitations on the monoamine used as an end-capping agent provided it has reactivity with carboxyl groups, and examples thereof include aliphatic monoamines such as methylamine, ethylamine, propylamine, butylamine, hexylamine, octylamine, decylamine, stearylamine, dimethylamine, diethylamine, dipropylamine or dibutylamine; alicyclic monoamines such as cyclohexylamine or dicyclohexylamine; and, aromatic monoamines such as aniline, toluidine, diphenylamine or naphthylamine. One type of monoamine may be used as an end-capping agent or two or more types may be used in combination.

A copper compound is preferably added to the polyamide at a copper concentration of 1 ppm to 500 ppm, and more preferably at 30 ppm to 500 ppm, in order to ensure thermal stability in environments at high temperature and high humidity. As a result, decreases in mechanical performance are inhibited extremely effectively even if the article of the present invention is placed for a long period of time in an environment at high temperature and high humidity or exposed for a long period of time to an environment containing a large amount of ozone. The heat-resistant strength retention rate decreases if the above-mentioned copper content is less than 30 ppm, while strength decreases if the added amount exceeds 500 ppm.

There are particular limitations on the type of copper compound, and for example, organic copper salts such as copper acetate or copper halides such as cuprous chloride or cupric chloride can be used preferably. The copper compound is more preferably used in combination with a metal halide compound. Examples of metal halides include potassium iodide, potassium bromide and potassium chloride. Preferable combinations in the present embodiment consist of cupric iodide and potassium iodide and copper acetate and potassium iodide. Furthermore, copper content in the polyamide can be measured by atomic absorption or colorimetry.

Although not limited thereto, an organic antioxidant such as a hindered phenol-based antioxidant, sulfur-based antioxidant or phosphorous-based antioxidant, a thermal stabilizer, a hindered amine-based, benzophenone-based or imidazole-based photostabilizer, or ultraviolet absorber and the like may also be added as stabilizer. Although a suitable amount is selected from the added amount thereof, the stabilizer can be added to the polyamide at 1 ppm to 1000 ppm. One type of these additives may be used alone or two or more types may be used in combination.

The total fineness of the polyamide filaments is preferably 100 dtex to 300 dtex. In the case of using in industrial material applications, a total fineness of 100 dtex or more enables sufficient strength, and from the viewpoints of spinnability and post-processing, total fineness is preferably 3000 dtex or less.

The number of filaments of the polyamide multifilament yarn is preferably 30 filaments to 500 filaments. Since multifilament fibers having a number of filaments of 30 filaments or more makes it possible to increase specific surface area and flexibly accommodate stress from the outside, rubber adhesion properties and fatigue resistance improve. Making the number of filaments to be 500 filaments or less inhibits contact among monofilaments caused by yarn swaying during spinning, thereby improving spinnability.

The monofilament fineness of the polyamide multifilament yarn is preferably 1 dtex to 7.0 dtex from the viewpoints of bending strength and fatigue resistance. If the monofilament fineness is 1 dtex or more, there is less likelihood of the occurrence of problems with yarn productivity, while if the monofilament fineness is 7.0 dtex or less, fibers having high flexibility are obtained resulting in improved bending strength and fatigue resistance.

Cross ratio refers to the value obtained by dividing the maximum diameter of a multifilament by the minimum diameter, and is an important parameter that serves as an indicator of uniformity between monofilaments. Since monofilament strength is induced toward the lowest physical property among the strength distribution of a monofilament, a large variation in strength among monofilaments prevents strength from being demonstrated. The cross ratio of the polyamide multifilament yarn of the present embodiment is 1.6 or less, preferably 1.5 or less. As a result of making the cross ratio to be 1.6 or less, elongation at the monofilament level occurs uniformly, there is little variation in strength among monofilaments, and superior strength is demonstrated as a multifilament yarn. The lower limit of the cross ratio is 1.0.

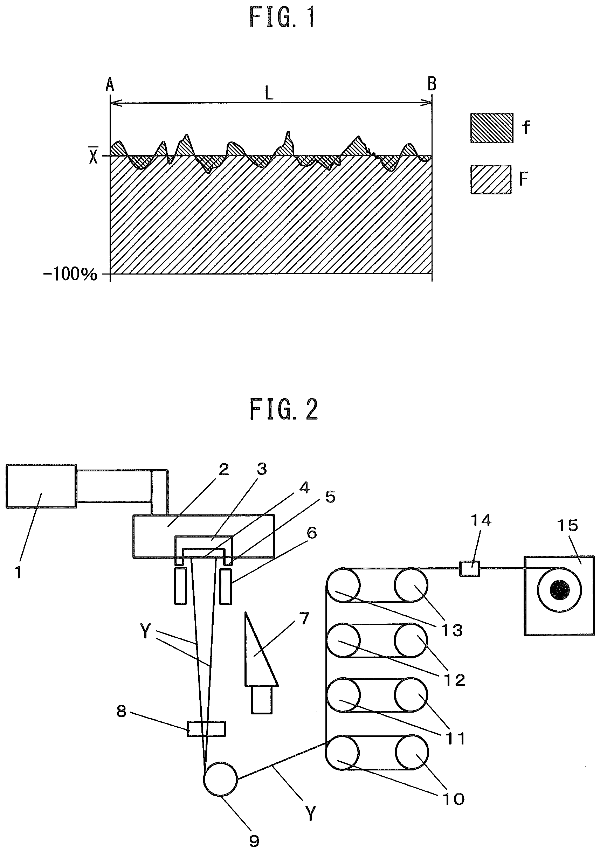

As shown in FIG. 1, U% refers to the value represented by the equation U(%) = (f/F) $\times$ 100 when a certain measurement length (L) is selected, the area defined by the average value of yarn thickness (X) over that length, -100%, origin (A) and endpoint (B) is defined as F, and the area defined by the fluctuation in yarn thickness over that length (unevenness curve) and (X) is defined as f. A smaller value for U% indicates lower unevenness and yarn quality is judged to be favorable. The value of U% of the polyamide multifilament yarn of the present embodiment is preferably 3.0 or less, more preferably 2.5 or less and even more preferably 2.0 or less. As a result of making U% to be 3.0 or less, fineness unevenness in the lengthwise direction of the yarn decreases and strength, wear resistance and fatigue resistance improve.

$\Delta$n refers to birefringence and can be used to evaluate the degree of fiber orientation. $\Delta$n is preferably 0.04 or more. If $\Delta$n is 0.04 or more, an indicator of rigidity in the form of storage elastic modulus E' increases, resulting in a tire cord having superior stability during running.

Tg refers to the temperature when a substance transforms from a vitreous state to a rubbery state, and can be measured with a differential scanning calorimeter (DSC) or dynamic viscoelasticity measuring instrument. The Tg of the polyamide multifilament yarn is preferably 90°C to 190°C. Tg is more preferably 100°C or higher and even more preferably 110°C or higher. In addition, Tg is preferably 180°C or lower and even more preferably 170°C or lower. As a result of the Tg of the polyamide multifilament fiber being 90°C or higher, a polyamide multifilament fiber can be obtained that has superior rigidity and heat resistance at high temperatures. In addition, as a result of the Tg of the polyamide multifilament yarn being 190°C or lower, yarn having favorable stretchability can be obtained.

Tm refers to the temperature at which a solid melts and becomes a liquid, and can be measured with a DSC and the like. Tm of the polyamide multifilament yarn is 270°C to 350°C from the viewpoints of spinnability and heat resistance. Tm is preferably 275°C or higher and more preferably 280°C or higher. In addition, Tm is more preferably 345°C or lower and even more preferably 340°C or lower. As a result of the Tm of the polyamide multifilament yarn being 270°C or higher, a polyamide multifilament yarn can be obtained that has superior heat resistance. In addition, as a result of Tm of the polyamide multifilament yarn being 350°C or lower, the melting temperature can be suppressed and thermal decomposition during spinning can be reduced.

In the case of using in an industrial material application, the strength of the polyamide multifilament yarn is preferably 4 cN/dtex or more. The strength thereof is more preferably 5 cN/dtex or more and even more preferably 6 cN/dtex or more.

Molecular weight distribution of the polyamide multifilament yarn can be evaluated based on the ratio of weight average molecular weight (Mw) to number average molecular weight (Mn) (Mw/Mn). The ratio of Mw/Mn of the polyamide multifilament yarn is preferably 4.0 or less, more preferably 1.5 to 3.8 and even more preferably 1.5 to 3.5. The lower limit of Mw/Mn is 1.0.

The molecular weight of the polyamide multifilament yarn is such that the sulfuric acid relative viscosity ($\eta$r) at 25°C at a concentration of 1% in 98% sulfuric acid as measured in accordance with JIS-K6810 is 1.5 to 4.0, preferably 1.7 to 3.5 and more preferably 1.8 to 3.3 from the viewpoints of strength, elongation and other mechanical properties and spinnability. If the value of $\eta$r is 1.5 or less, fiber is unable to be obtained that has sufficient strength for industrial material applications, while yarn having a value of $\eta$r of 4.0 or more cannot be obtained due to poor polymer fluidity and difficulty in spinning.

The strength retention rate of the polyamide multifilament yarn following dry heat aging at 200°C is preferably 80% or more, more preferably 85% or more and even more preferably 90% or more. A strength retention rate at 200°C of 80% or more allows the obtaining of processing stability in post-processing steps requiring heat treatment.

Tires reach extremely high temperatures as a result of running at high speeds for an extended period of time, after which they cool to normal temperature during the time the vehicle is parked. Flat spots are presumed to occur due to changes in rigidity of the tire cord attributable to this change in temperature. An important technical matter of the present invention is that "the small difference in rigidity of the polyamide multifilament yarn between normal temperature and high temperatures is effective for inhibiting the formation of tire flat spots. More specifically, the ratio of the storage elastic modulus of the polyamide multifilament yarn at 120°C (E'(120°C)) to the storage elastic modulus at 25°C (E'(25°C)), namely E'(120°C)/E'(25°C), which is determined by measuring dynamic viscoelasticity, is 0.6 to 0.9 and preferably 0.7 to 0.9. As a result of making the value of E'(120°C)/E'(25°C) to be 0.6 to 0.9, the formation of flat spots can effectively be inhibited.

The peak temperature of the loss tangent (tan$\delta$) of the polyamide multifilament yarn, as determined by measuring dynamic viscoelasticity, is preferably 150°C to 200°C. As a result of making the peak temperature of tan$\delta$ to be 150°C or more, motion of the molecular chain in an amorphous portion or irregular region is inhibited, thereby improving fatigue resistance at high temperatures.

In addition, the value of tan$\delta$ at the peak temperature is preferably 0.3 or less. As a result of stretching the fiber and reducing the value of tanδ, it becomes more difficult for the molecular chain to move and rigidity is maintained at high temperatures. In addition, since the structure of the molecular chain does not change in response to motion associated with repeated stretching, the resulting fiber has superior fatigue resistance. The value of tanδ during normal stretching is 0.01 or more.

[Polyamide Production Method]

Various methods are used to produce polyamide, several examples of which are indicated below.

(1) Method consisting of heating an aqueous solution or aqueous suspension of a dicarboxylic acid-diamine salt or mixture thereof and copolymerizing while maintaining in a molten state (to also be referred to as the "hot melt polymerization method").
(2) Method consisting of increasing the degree of polymerization of a polyamide obtained with the hot melt polymerization method while maintaining in a solid state at a temperature equal to or lower than the melting point thereof (to also be referred to as the "hot melt polymerization-solid phase polymerization method").
(3) Method consisting of increasing the degree of polymerization of an aqueous solution or aqueous suspension of a diamine-dicarboxylic acid salt or mixture thereof by heating and then re-melting the precipitated prepolymer with a kneader or other type of extruder.
(4) Method consisting of increasing the degree of polymerization of an aqueous solution or aqueous suspension of a diamine-dicarboxylic acid salt or mixture thereof by heating and then maintaining the precipitated prepolymer in a solid state at a temperature equal to or lower than the melting point of the polyamide (to also be referred to as the "prepolymer-solid phase polymerization method").
(5) Method consisting of polymerizing a diamine-dicarboxylic acid salt or mixture thereof while maintaining in a solid state (to also be referred to as the "solid phase polymerization method").
(6) Method consisting of polymerizing using a dicarboxylic acid halide component equivalent to a dicarboxylic acid and a diamine component (to also be referred to as the "solution method").

In the polyamide production method, polymerizing while maintaining the ratio of the trans isomer of the alicyclic dicarboxylic acid at 85% or less is preferably from the viewpoint of fluidity of the polyamide, and as a result of maintaining at a ratio of 80% or less in particular, polyamide high a high melting point as well as superior color tone and tensile strength is obtained. In the polyamide production method, although it is necessary to raise the heating temperature and/or prolong the heating time in order to increase the degree of polymerization and raise the melting point of the polyamide, in that case, there are cases in which discoloration of the polyamide caused by heating or decreased tensile strength caused by heat deterioration may occur. In addition, there are also cases in which there is a significant decrease in the rate at which molecular weight increases. Polymerization while maintaining the ratio of the trans isomer at 80% or less is preferable since discoloration of the polyamide and decreases in tensile strength caused by heat deterioration can be prevented.

Production of the polyamide according to the hot melt polymerization method of (1) or the hot melt polymerization-solid phase polymerization method of (2) is preferable since the ratio of the trans isomer can be easily maintained at 85% or less and a polyamide having superior color tone can be obtained.

In the polyamide production method, the type of polymerization may be batch polymerization or continuous polymerization. There are no particular limitations on the polymerization device, and examples thereof include a known device such as an autoclave reactor, tumbler reactor, kneader or other type of extruder-type reactor.

The polyamide can be produced using the batch-type hot melt polymerization method described below for the polyamide production method.

In the batch-type hot melt polymerization method, for example, an approximately 40% by weight to 60% by weight solution containing the polyamide components (dicarboxylic acid, diamine and lactam and/or aminocarboxylic acid as necessary) is concentrated to approximately 65% by weight to 90% by weight using water as solvent in a concentrating tank operated a temperature of 110°C to 180°C and pressure (gauge pressure) of 0.035 MPa to 0.6 MPa. Next, the concentrated solution is transferred to an autoclave and heating is continued until the pressure (gauge pressure) in the vessel reaches about 1.5 MPa to 5.0 MPa. Subsequently, the pressure (gauge pressure) is held at about 1.5 MPa to 5.0 MPa while venting water and/or gas components, and at the point the temperature has reached about 250°C to 350°C, the pressure (gauge pressure) is lowered to atmospheric pressure. After the pressure has decreased to atmospheric pressure, water formed as a by-product can be effectively removed by reducing pressure as necessary. Subsequently, the vessel is pressurized with an inert gas such as nitrogen and the molten polyamide is extruded in the form of a strand. The strand is then cooled and cut to obtain pellets.

The polyamide can also be produced using the continuous hot melt polymerization method described below for the polyamide production method.

In the continuous hot melt polymerization method, an approximately 40% by weight to 60% by weight solution containing the polyamide components is preheated to about 40°C to 100°C in the vessel of a preliminary device using water as solvent, after which the solution is transferred to a concentrating tank/reactor where the solution is concentrated to about 70% by weight to 90% by weight at a pressure (gauge pressure) of about 0.1 MPa to 0.5 MPa and temperature of about 200°C to 270°C to obtain a concentrated solution. The concentrated solution is discharged into a flusher held to a temperature of about 200°C to 350°C followed by lowering the pressure to atmospheric pressure (gauge pressure: 0 MPa). After the pressure has decreased to atmospheric pressure, pressure is reduced as necessary. Subsequently, the molten polyamide is extruded into a strand and the strand is cooled and cut to obtain pellets.

[Polyamide Multifilament yarn]

The polyamide multifilament yarn of the present embodiment is the result of forming the previously described polyamide into a yarn by a prescribed method. Since this polyamide is an alicyclic polyamide, although the fluidity and thread-forming properties thereof are superior to those of an aromatic polyamide, they are inferior to typical aliphatic polyamides such as Nylon 66. In addition, due to the high Tm thereof, problems caused by polymer deterioration and exacerbation of flow characteristics attributable to heat are extremely serious. In the present embodiment, a yarn can be obtained according to the aforementioned production method that demonstrates superior strength, spinning stability and uniformity.

Although various methods can be used to produce the polyamide multifilament yarn, normally melt spinning is used, and spinning is preferably carried out using a screw-type melt extruder. The spinning temperature (melting temperature) of the polyamide is preferably 300°C to 360°C. A temperature of 300°C or higher makes it possible to inhibit soiling by unmelted polyamide caused by an inadequate amount of heat. Heating at a temperature of 360°C or lower significantly reduces thermal decomposition of polymer and generation of decomposition gas, thereby improving spinnability.

After melting, the polyamide is passed through a spinning pack incorporating a metal nonwoven fabric filter containing holes having a diameter of about 10 $\mu$m to 100 $\mu$m and then discharged after passing through a nozzle having a cap containing pores referred to as a spinneret. Since the fiber is spun into a multifilament, the nozzle used at this time preferably has 30 or more holes. In addition, in order to ensure spinnability, the pore diameter is preferably 0.10 mm to 0.50 mm. Moreover, the ratio L/D of nozzle length (L) to nozzle diameter (D) is preferably within the range of 1.0 to 4.0.

Since multifilament spinnerets require a large number of pores, the spinneret has a larger surface area than in the case of monofilaments, thereby resulting in greater susceptibility to the occurrence of temperature irregularities on the spinneret surface. Since the polyamide multifilament yarn of the present embodiment in particular has a high Tm and temperature has a considerable effect on the flow characteristics thereof, the occurrence of temperature irregularities makes it difficult to obtain uniform fibers. Therefore, it is particularly important to reduce temperature irregularities on the surface of the spinneret and make the temperature of the polymer uniform during discharge. It is preferable to install a spinneret heater to enhance uniformity of spinneret surface temperature. Since the exterior of the spinneret surface is subjected to extreme cooling by accompanied flow of the threads, the spinneret heater is preferably directly attached to the spinneret so as to enclose the outside thereof.

Differences in melt viscosity of the polymer at the time of discharge can be reduced making it possible to obtain fibers having superior uniformity by heating the surface of the spinneret to a temperature within the range of the Tm of the polymer to a temperature 60°C or more higher than that Tm and making the temperature difference between the center and outer periphery of the spinneret surface to be within 3°C. As a result of making the spinneret surface temperature to be equal to or higher than the Tm of the polymer, uniform fibers can be obtained that are free of discharge unevenness caused by an inadequate amount of heat. Heat deterioration can be reduced by making the spinneret surface temperature to be lower than the temperature 60°C higher than Tm.

A heating zone is preferably provided for the threads immediately after discharge with a heat sleeve and the like. A heat sleeve refers to a heater that surrounds the yarn. Since the polyamide multifilament yarn of the present embodiment has a high Tm, it solidifies rapidly immediately after spinning, thereby resulting in decreased thread-forming properties and the frequent occurrence of yarn breakage immediately after leaving the spinneret, and making spinning difficult. Therefore, by installing a heat sleeve to raise the ambient temperature immediately after leaving the spinneret and make that temperature uniform, rapid solidification of the molten polymer and uneven solidification among monofilaments are inhibited, thereby resulting in a considerable improvement in thread-forming properties. In addition, due to the high Tg of the polyamide multifilament yarn of the present embodiment, although the yarn is easily oriented due to the effect of spinning draft leading to a decrease in stretchability, the installation of a heat sleeve relaxes non-uniform orientation caused by spinning draft, thereby improving stretchability and strength. Since the yarn is cooled from the outer monofilaments due to the effects of accompanying flow, the heat sleeve is preferably a cylindrical heater so as to enclose the outside of the threads. In addition, in order to ensure thread-forming properties and orientational relaxation immediately after discharge, the heating zone is required to have a certain distance, and the length of the heat sleeve is preferably, for example, 10 mm to 300 mm. Moreover, the temperature of the heat sleeve is preferably 100°C to 200°C. If the temperature is below 100°C, the discharged molten polymer solidifies immediately, thereby resulting in a decrease in thread-forming properties and orientational relaxation. On the other hand, if the temperature is higher than 200°C, heat deterioration occurs resulting in a decrease in strength and poor color tone.

The yarn that has passed through the heating zone are rapidly cooled and solidified by exposing to a cold air flow. The blowing rate of the cold air at this time is preferably within the range of 0.2 m/min to 2.0 m/min. If the blowing rate is slower than 0.2 m/min, cooling becomes inadequate. If the blowing rate is faster than 2.0 m/min, yarn sway increases, monofilaments make contact and monofilaments become adhered resulting in decreases in spinnability and stretchability. Next, a finishing agent is applied. A finishing agent in the form of a nonaqueous finishing agent diluted with mineral oil or aqueous dispersion-based emulsion having a finishing agent concentration of 15% by weight to 35% by weight is applied. The amount of finishing agent applied to the fiber is 0.5% by weight to 2.5% by weight, and preferably 0.7% by weight to 2.0% by weight, based on the wound yarn.

Although a heating bath, heated steam sprayer, roller heater, contact-type preheater or non-contact-type preheater and the like can be used in the drawing step, a roller heater is preferable from the viewpoint of productivity. In addition, drawing in the present invention preferably consist of carrying out cold drawing and two or more stages of multistage hot drawing comprising hot drawing. In order to express fiber strength in particular, the cold drawing temperature, hot drawing temperature, cold draw ratio and hot draw ratio are important.

Cold drawing fulfills the role of preliminary drawing performed for the purpose of suitably aligning fiber orientation prior to hot drawing. Since the polyamide resin of the present embodiment has a high Tg, the cold drawing temperature is required to be a high temperature ranging from 30°C below Tg to Tg. As a result of making the temperature to be equal to or higher than a temperature 30°C below Tg, there is no occurrence of uneven drawing, the fiber is oriented uniformly, and favorable strength is obtained. As a result of making the temperature equal to or lower than Tg, crystallization is inhibited from proceeding excessively. In addition, although locations referred to as neck points, where diameter becomes extremely small and orientation proceeds, are present in the case of uniaxial orientation by drawing, as a result of making the cold drawing temperature to be equal to or lower than Tg, these neck points are stabilized, thereby allowing the obtaining of a uniform multifilament.

Due to the high Tg of the polyamide resin of the present embodiment, there is increased susceptibility to the occurrence of uneven drawing and excessive thermal crystallization due to an inadequate amount of heat or an excessive amount of heat during drawing. Consequently, allocation of the cold draw ratio and hot draw ratio is extremely important for a high level of drawing. Allocation of the cold draw ratio is preferably 50% to 80% of the total draw ratio. If the allocation of the cold draw ratio is 50% or more of the total draw ratio, a required amount of preliminary drawing is imparted to the fiber allowing the obtaining of uniform fibers that are free of uneven drawing. In addition, excessive crystallization during hot drawing can be inhibited. On the other hand, if the allocation of the cold draw ratio is 80% or less of the total draw ratio, the required amount of heat for crystallization can be imparted during hot drawing, thereby allowing the obtaining of superior strength.

The hot drawing temperature is preferably 200°C to 250°C. If this temperature is 200°C or higher, an amount of heat required for crystallization can be imparted, while on the other hand, if the temperature is lower than 250°C, heat deterioration of the fiber can be inhibited. The total draw ratio is 2.0 to 7.0 and preferably 3.0 to 6.0.

The drawn yarn is preferably interlaced by spraying the yarn with a high-pressure liquid using an interlacing device prior to winding. A conventional air interlacing device can be suitably used for the interlacing device. Imparting interlacing to the multifilament inhibits unraveling of monofilament bundles and makes it possible to avoid problems such as cord breakage until tire cord treatment is performed. In addition, enhancing rupture elongation contributes to improvement of plunger energy. The number of interlaces is preferably 1/m to 30/m, more preferably 1/m to 20/m, and even more preferably 1/m to 15/m. As a result of making the number of interlaces to be 1/m or more, unraveling of monofilament bundles can be inhibited, while on the other hand, by making the number of interlaces to be 20/m or less, damage to the threads caused by interlacing can be reduced.

[Tire Cord]

The polyamide multifilament yarn of the present embodiment can be used as a tire cord by processing into the form of a fiber cord by twisting. Twisting the multifilament yarn results in a uniform strength utilization ratio and improves the fatigue properties thereof. The number of twists in the polyamide multifilament yarn of the present embodiment is preferably one twist/m or more. Although there are no restrictions on the type of twist or twisting method, twisting within the range of a twist constant (K) of 300 to 30,000 is preferable. Furthermore, twist constant (K) is defined using the equation indicated below:

$$K = Y \times D^{0.5} (T/m \cdot dtex^{0.5})$$

(wherein, Y represents the number of twists per meter of twisted polyamide (T/m), and D represents the total nominal fineness of the twisted polyamide (dtex)). Tension during twisting is preferably 0.01 cN/dtex to 0.2 cN/dtex.

A tire cord used in a tire that uses the aforementioned twisted fiber cord for the cord fabric is preferable for use as the tire cord of the present embodiment. In this case, 1500 to 3000 cords composed of a polyamide multifilament yarn subjected to initial twisting and final twisting are arranged for the warp yarn, and weaving this warp yarn with weft yarn to prevent them from unraveling allows the obtaining of a (woven) cord fabric. In addition, the width of the cord fabric is preferably 140 cm to 160 cm and the length is preferably 800 m to 2500 m, and the weft yarn is preferably driven in at an interval of 2.0/5 cm to 5.0/5 cm.

Although there are no particular limitations on the weft yarn used when weaving the cord fabric, preferable examples thereof include spun yarn made of cotton or Rayon and fine-spun twisted union yarn consisting of synthetic fiber yarn and cotton.

A resorcin-formalin-latex (RFL) solution is preferably applied to the polyamide multifilament yarn cord or cord fabric composed thereof in order to adhere the rubber that composes the tire to the polyamide cord. The application rate of RFL resin is preferably 0.1% by weight to 10% by weight and more preferably 1% by weight to 7% by weight based on the polyamide multifilament yarn cord. Although the RFL resin is normally adhered after twisting, it may also be adhered before or during twisting. The composition of the RFL solution is preferably 0.1% by weight to 10% by weight of resorcin, 0.1% by weight to 10% by weight of formalin and 1% by weight to 28% by weight of latex, and more preferably 0.5% by weight to 3% by weight of resorcin, 0.5% by weight to 3% by weight of formalin, and 10% by weight to 25% by weight of latex.

After adhering the RFL solution, the RFL solution is subjected to drying, fixation and relaxation treatment. The drying temperature of the RFL solution is preferably 120°C to 250°C and more preferably 140°C to 200°C, and the drying time is preferably 10 seconds or more and more preferably 20 seconds to 120 seconds. Following drying, the twisted yarn is subsequently subjected to heat treatment in a heat setting zone and normalizing zone. The temperatures and times of the heat setting zone and normalizing zone are preferably 150°C to 250°C and 10 seconds to 300 seconds, respectively. At this time, the twisted yarn is stretched by 2% to 10% and preferably stretched by 3% to 9%.

A tire can then be obtained using a tire cord or cord fabric composed of the polyamide multifilament yarn obtained in this manner. For example, the tire may have the tire cord used in at least one of the cap ply and carcass play arranged within the tire tread. Such a tire can be produced according to known methods, and the tire is effectively reinforced by arranging a cap ply and/or carcass play containing the tire cord of the present embodiment on the inside of the tread portion.

Examples

Although the following provides a detailed explanation of the present invention by indicating examples and comparative examples thereof, the present invention is not limited to the following examples.

Preparation of raw materials, measurement methods and production methods used in the examples and comparative examples are as indicated below. Furthermore, in the present examples, 1 kg/cm$^2$ is 0.098 MPa.

(1) (Total) Fineness of Polyamide Multifilament Fiber (dtex)

The weight W and length L of the polyamide multifilament fiber were measured and fineness was determined from the equation: fineness (d) = 10000 $\times$ W (g)/L (m).

(2) Sulfuric Acid Relative Viscosity of Polyamide Multifilament Yarn at 25°C ($\eta$r)

Sulfuric acid relative viscosity was measured in compliance with JIS-K6810. More specifically, a solution having a concentration of 1% was prepared using 98% sulfuric acid {(1 g of polyamide multifilament fiber)/(100 mL of 98% sulfuric acid)} followed by measuring under temperature conditions of 25°C.

(3) Polyamide Multifilament Yarn Tg (°C)

A sample having a yarn length of 20 mm was measured using the Model DMS-6100 Dynamic Viscosity Mechanical Analyzer manufactured by Seiko Instruments Inc. under conditions of a frequency of 10 Hz, strain amplitude of 10 $\mu$m, minimum tension/compressive force ratio of 50 mN, tension/compressive force gain ratio of 1.5 and initial force amplitude of 50 mN at a temperature of -50°C to 270°C using a temperature rise rate of 2.5°C/min. Tg was determined from the tangent of storage elastic modulus.

(4) Polyamide Multifilament yarn Tm (°C)

Tm was measured using the Pyris 1-DSC manufactured by Perkin-Elmer Corp. in compliance with JIS-K7121. The temperature of the endothermic peak (melting peak) that appears when about 10 mg of sample are heated to 200°C to 400°C corresponding to the melting point of the sample at a heating rate of 20°C/min in a nitrogen atmosphere was defined as Tm (°C).

(5) Polyamide Trans Isomer Ratio (%)

30 mg to 40 mg of polyamide were dissolved in 1.2 g of hexafluoroisopropanol deuterium chloride followed by measurement by $^1$H-NMR. In the case of 1,4-cycloheaxanedicarboxylic acid, the trans isomer ratio was determined from the ratio of the peak area at 1.98 ppm derived from the trans isomer to the peak areas at 1.77 ppm and 1.86 ppm derived from the cis isomer.

(6) Soiling of Spinneret Surface

Melt spinning was carried out according to the method described in the examples and comparative examples followed by observing soiling of the spinneret surface after spinning for 6 hours. The occurrence of carbonization or yarn bending was evaluated as C, while the absence of the occurrence of carbonization or yarn bending was evaluated as A.

(7) Number of Yarn Breakages

Melt spinning was carried out according to the method described in the examples and comparative examples, and number of yarn breakages during the first 15 minutes after the start of spinning was defined as initial yarn breakage, and the total number of yarn breakages after 6 hours had elapsed from the start of spinning was defined as the time-based yarn breakage. Zero yarn breakages were evaluated as A, 1 to 5 yarn breakages were evaluated as B, and 6 or more yarn breakages were evaluated as C.

(8) Mw (Weight Average Molecular Weight)/Mn (Number Average Molecular Weight)

The GPC (gel permeation chromatography) HLC-8320 and three TKS gel IGMH-HS columns manufactured by Tosoh Corp. were used to measure the ratio of Mw (weight average molecular weight)/Mn (number average molecular weight) of the polyamide multifilament fiber. The ratio was calculated using the Mw (weight average molecular weight)/Mn (number average molecular weight) ratio when converted using hexafluoroisopropanol for the solvent and the poly(methyl methacrylate) (PMMA) standard sample manufactured by Showa Denko K.K. for the standard sample.

(9) Cross Ratio

Cross-sectional cuts were made in the polyamide multifilament yarn followed by observation of 50 random monofilaments with a light microscope at a magnification of 250X. The diameter of the monofilaments at that time was measured and cross ratio was determined from the equation indicated below.

$$\text{Cross ratio} = \text{maximum diameter/minimum diameter}$$

(10) U%

Wooster normal value was measured under conditions of a yarn speed of 8 m/min and chart speed of 50 cm/min using the KET-080C Evenness Tester manufactured by Keisokki Kogyo Co., Ltd.

(11) Polyamide Multifilament Yarn Strength (cN/dtex) and Elongation (%)

A fiber sample measuring 25 cm was measured at a lowering rate of 300 mm/min using the Autograph AGS-500NG manufactured by Shimadzu Corp. in compliance with JIS-L1013.

**EP 3 093 379 B1**

(12) Δn

Δn was measured by installing the Model U-CTB Compensator manufactured by Olympus Corp. on the BX-51P polarizing microscope manufactured by Olympus Corp.

(13) Number of Interlaces

A piece of yarn was immersed in the relaxed state in a bath filled with water while holding onto both ends to open the fibers followed by measuring the number of interlaces per meter by counting visually.

(14) 200°C Heat Resistance Test (%)

A flail wound with the polyamide multifilament yarn at a fixed tension is heated for 1 hour at 200°C in an air environment. After cooling by allowing to stand overnight, yarn strength was measured in compliance with JIS-L1013 using the Autograph AGS-500NG manufactured by Shimadzu Corp followed by calculating the strength retention rate before and after heating.

(15) Storage Elastic Modulus E' Ratio (E'(120°C/E'(25°C))

A sample having a yarn length of 20 mm was measured using the Model DMS-6100 Dynamic Viscosity Mechanical Analyzer manufactured by Seiko Instruments Inc. under conditions of a frequency of 10 Hz, strain amplitude of 10 μm, minimum tension/compressive force ratio of 50 mN, tension/compressive force gain ratio of 1.5 and initial force amplitude of 50 mN at a temperature of -50°C to 270°C using a temperature rise rate of 2.5°C/min. The ratio of the storage elastic modulus E' at that time at 120°C (E'(120°C)) to the storage elastic modulus at 25°C (E'(25°C)) was defined as "E'(120°C)/E'(25°C)".

(16) Loss Tangent (tanδ) Peak (°C)

A sample having a yarn length of 20 mm was measured using the Model DMS-6100 Dynamic Viscosity Mechanical Analyzer manufactured by Seiko Instruments Inc. under conditions of a frequency of 10 Hz, strain amplitude of 10 μm, minimum tension/compressive force ratio of 50 mN, tension/compressive force gain ratio of 1.5 and initial force amplitude of 50 mN at a temperature of -50°C to 270°C using a temperature rise rate of 2.5°C/min. The peak of tanδ was measured at that time.

(17) Strength (N)

A cord sample measuring 25 cm was measured at a lowering rate of 300 mm/min in compliance with JIS-L1013 using the Autograph AGS-500NG manufactured by Shimadzu Corp.

(18) Initial Rubber Adhesive Strength (N/cm)

An unvulcanized rubber sheet having a thickness of 6.0 mm cut to a width of 1 cm × length of 22 cm was embedded in a grooved vulcanized sheet followed by arranging various types of fiber cords therein, layering an unvulcanized rubber sheet having a thickness of 6.0 mm thereon, and press-vulcanizing for 30 minutes at 150°C and 34 MPa followed by cooling to room temperature. Subsequently, portions not required for measurement were removed to obtain a T-pull measurement sample having adhesion measuring length of 1 cm. The resulting sample was measured for adhesive strength according to the method indicated in the T-Test (Method A) of JIS-L1017 (2002). The measuring speed was 300 mm/min.

(19) Heat-Resistant Rubber Adhesive Strength (N/cm)

After subjecting to vulcanization treatment under the same conditions as that of initial adhesion, press vulcanization was continued to be carried out for 60 minutes at 170°C and 34 MPa. Subsequently, the resulting sample was measured for adhesive strength according to the method indicated in the T-Test (Method A) of JIS-L1017 (2002). The measuring speed was 300 mm/min.

14

(20) High-Load Drum Durability

After adjusting a prototype tire to the maximum air pressure according to JIS standards, the tire was allowed to stand for 24 hours followed by readjusting the air pressure, subjecting the tire to a load twice that of the maximum load according to JIS standards, and running the tire for 30,000 km at a speed of 60 km/hr with a drum tester having a diameter of 1.7 m. Completion of running was evaluated as A while the occurrence of a failure during testing was evaluated as C.

(21) Flat Spots

A prototype tire was installed on an actual vehicle, run for a fixed period of time to adequately warm up, and then subjected to a load and allowed to stand until it cooled completely followed by evaluating for flat spots by measuring tire deformation as a change in roundness. Namely, roundness before and after loading were respectively measured, and that difference was determined as the amount of flat spots and indicated as an index based on a value of 100 for the amount of flat spots of Comparative Example 1. A high flat spot index value is favorable in that it indicates a lower amount of flat spots.

<Example 1>

Polyamide polymerization was carried out according to the "hot melt polymerization method".
Using 1500 g for the weight of the raw material monomers, 831 g (4.83 moles) of 1,4-cyclohexanedicarboxylic acid, 333 g (1.93 moles) of 1,10-decamethylenediamine and 336 g (2.90 moles) of 2-methylpentamethylenediamine were dissolved in 1500 g of distilled water to prepare an equimolar 50% by weight homogeneous aqueous solution of the raw material monomers. 17.0 g of 1,10-decamethylenediamine were added to this homogeneous aqueous solution so that the added amount was 2.1% based on the equimolar amount (0.10 moles, 2.1% based on the total amount of diamine) to obtain an aqueous solution.
The resulting aqueous solution was charged into an autoclave having an internal volume of 5.4 L (Nitto Koatsu Ltd.) followed by warming until the liquid temperature (internal temperature) reached 50°C and replacing the inside of the autoclave with nitrogen. The liquid was continued to be heated from about 50°C until the pressure inside the autoclave tank as measured with a pressure gauge (pressure inside the autoclave is to hereinafter be referred to as gauge pressure) reached about 2.5 kg/cm$^2$ (the liquid temperature in the system was about 145°C).
Heating was continued while removing water outside the system to maintain the pressure inside the tank at 2.5 kg/cm$^2$, and the concentration of the aqueous solution was concentrated to about 75% by weight (liquid temperature of about 160°C with this system). Removal of water was discontinued and heating was continued until the pressure inside the tank reached about 30 kg/cm$^2$ (liquid temperature of about 245°C with this system). Heating was continued to a temperature 30°C lower than the final temperature while removing water outside the system to maintain the pressure inside the tank at about 30 kg/cm$^2$. After the liquid temperature had risen to a temperature 30°C lower than the final temperature (here, 280°C), the pressure inside the tank was lowered over the course of 60 minutes until the pressure inside the tank reached atmospheric pressure (gauge pressure of 0 kg/cm$^2$) while continuing to heat. Subsequently, the heater temperature was adjusted so that the final temperature of the resin (liquid) reached about 310°C. Pressure inside the tank was maintained for 10 minutes under reduced pressure of 100 torr with a vacuum device while leaving the resin temperature unchanged. Subsequently, the nitrogen was pressurized and the resin was formed into the shape of a strand from the lower spinneret (nozzle) followed by cooling with water, cutting and discharging in the form of pellets to obtain polyamide. The resulting polyamide was adjusted to a moisture content of 500 ppm by drying with a vacuum dryer.
Weight compositions, polymerization conditions and other parameters are collectively shown in the following Tables 1 and 2 together with other examples and comparative examples. Compositions of the yarns after going through the subsequent spinning step are as shown in Tables 1 and 2.
The dried polyamide was spun under conditions of a spinning temperature of 305°C, spinneret heater temperature of 305°C and heat sleeve temperature of 120°C (heat sleeve length: 150 mm, inner diameter: 170 mm) using a melt spinning apparatus (narrow pore nozzle: 210 pores, pore diameter: 0.23 mm, outer diameter: 130 mm). The temperature difference between the center and outer periphery of the spinneret at this time was 1°C. Subsequently, after cooling at a cold air blowing rate of 0.9 m/s, a finishing agent was applied at 1.0% by weight to the wound fiber. Next, the polyamide was drawn to 65% of the total draw ratio at a cold drawing temperature of 140°C followed by additionally drawing at a hot drawing temperature of 220°C. Following drawing, interlaces were applied at the rate of 8/m with an interlacing device followed by winding with a winder to obtain a polyamide multifilament yarn. The results of subsequently evaluating the resulting yarn are shown in the following Table 3. The resulting polyamide multifilament yarn had a high Tg and demonstrated superior yarn uniformity and spinning stability.

<Example 2>

Using 1500 g for the weight of the raw material monomers, a polymer was polymerized in the same manner as Example 1 using the composition and conditions of Table 1, and the resulting polyamide was dried with a vacuum dryer and adjusted to a moisture content of 500 ppm.

The dried polyamide was spun under conditions of a spinning temperature of 320°C, spinneret heater temperature of 320°C and heat sleeve temperature of 120°C (heat sleeve length: 150 mm, inner diameter: 170 mm) using a melt spinning apparatus (narrow pore nozzle: 72 pores, pore diameter: 0.23 mm, outer diameter: 130 mm). The temperature difference between the center and outer periphery of the spinneret at this time was 1°C. Subsequently, after cooling at a cold air blowing rate of 0.9 m/s, a finishing agent was applied at 1.0% by weight to the wound fiber. Next, the polyamide was drawn to 65% of the total draw ratio at a cold drawing temperature of 138°C followed by additionally drawing at a hot drawing temperature of 220°C. Following drawing, interlaces were applied at the rate of 8/m with an interlacing device followed by winding with a winder to obtain a polyamide multifilament yarn. The results of subsequently evaluating the resulting yarn are shown in the following Table 3. The resulting polyamide multifilament fiber had a high Tg and demonstrated superior yarn uniformity and spinning stability. In addition, the values of tan$\delta$ of the undrawn yarn and drawn yarn of Example 2 were respectively as follows: undrawn yarn: 0.48, drawn yarn: 0.20.

<Example 3>

Using 1500 g for the weight of the raw material monomers, a polymer was polymerized in the same manner as Example 1 using the composition and conditions of Table 1, and the resulting polyamide was dried with a vacuum dryer and adjusted to a moisture content of 500 ppm.

The dried polyamide was spun and drawn under the conditions shown in the following Table 3 using the same melt spinning apparatus as Example 2 (narrow pore nozzle: 72 pores, pore diameter: 0.23 mm, outer diameter: 130 mm). The results of subsequently evaluating the resulting yarn are shown in the following Table 3. The resulting polyamide multifilament yarn had a high Tg and demonstrated superior yarn uniformity and spinning stability.

<Example 4>

Using 1500 g for the weight of the raw material monomers, a polymer was polymerized in the same manner as Example 1 using the composition and conditions of Table 1, and the resulting polyamide was dried with a vacuum dryer and adjusted to a moisture content of 500 ppm.

The dried polyamide was spun under conditions of a spinning temperature of 340°C, spinneret heater temperature of 340°C and heat sleeve temperature of 120°C (heat sleeve length: 150 mm, inner diameter: 170 mm) using a melt spinning apparatus (narrow pore nozzle: 140 pores, pore diameter: 0.23 mm, outer diameter: 130 mm). The temperature difference between the center and outer periphery of the spinneret at this time was 1°C. Subsequently, after cooling at a cold air blowing rate of 0.9 m/s, a finishing agent was applied at 1.0% by weight to the wound fiber. Next, the polyamide was drawn to 65% of the total draw ratio at a cold drawing temperature of 140°C followed by additionally drawing at a hot drawing temperature of 220°C. Following drawing, interlaces were applied at the rate of 8/m with an interlacing device followed by winding with a winder to obtain a polyamide multifilament yarn. The results of subsequently evaluating the resulting yarn are shown in the following Table 3. The resulting polyamide multifilament yarn had a high Tg and demonstrated superior yarn uniformity and spinning stability.

<Example 5>

Using 1500 g for the weight of the raw material monomers, a polymer was polymerized in the same manner as Example 1 using the composition and conditions of Table 1, and the resulting polyamide was dried with a vacuum dryer and adjusted to a moisture content of 500 ppm.

The dried polyamide was spun and drawn under the conditions shown in the following Table 3 using the same melt spinning apparatus as Example 4 (narrow pore nozzle: 140 pores, pore diameter: 0.23 mm, outer diameter: 130 mm). The results of subsequently evaluating the resulting fiber are shown in the following Table 3. In Example 5, the ratio of 1,10-decamethylenediamine in the diamine component was outside the range defined in the claims, melting point was high, and both spinnability and U% were poor.

<Example 6>

Using 1500 g for the weight of the raw material monomers, a polymer was polymerized in the same manner as Example 1 using the composition and conditions of the following Table 1, and the resulting polyamide was dried with a vacuum dryer and adjusted to a moisture content of 500 ppm.

The dried polyamide was spun and drawn under the conditions shown in the following Table 3 using the same melt spinning apparatus as Example 4 (narrow pore nozzle: 140 pores, pore diameter: 0.23 mm, outer diameter: 130 mm). The results of subsequently evaluating the resulting fiber are shown in Table 3. The resulting polyamide multifilament yarn had a high Tg and demonstrated superior yarn uniformity and spinning stability.

<Examples 7 and 8>

Using 1500 g for the weight of the raw material monomers, a polymer was polymerized in the same manner as Example 1 using the composition and conditions of the following Table 1, and the resulting polyamide was dried with a vacuum dryer and adjusted to a moisture content of 500 ppm.

The dried polyamide was spun and drawn under the conditions shown in the following Table 3 using the same melt spinning apparatus as Example 2 (narrow pore nozzle: 72 pores, pore diameter: 0.23 mm, outer diameter: 130 mm). The results of subsequently evaluating the resulting fiber are shown in Table 3. The resulting polyamide multifilament yarn had a high Tg and demonstrated superior yarn uniformity and spinning stability.

<Examples 9 and 10>

Using 1500 g for the weight of the raw material monomers, a polymer was polymerized in the same manner as Example 1 using the composition and conditions of the following Table 1, and the resulting polyamide was dried with a vacuum dryer and adjusted to a moisture content of 500 ppm.

The dried polyamide was spun and drawn under the conditions shown in the following Table 3 using the same melt spinning apparatus as Example 4 (narrow pore nozzle: 140 pores, pore diameter: 0.23 mm, outer diameter: 130 mm). The results of subsequently evaluating the resulting fiber are shown in Table 3. The resulting polyamide multifilament yarn had a high Tg and demonstrated superior yarn uniformity and spinning stability.

<Example 11>

Using 1500 g for the weight of the raw material monomers, a polymer was polymerized in the same manner as Example 1 using the composition and conditions of the following Table 1, and the resulting polyamide was dried with a vacuum dryer and adjusted to a moisture content of 500 ppm.

The dried polyamide was spun and drawn under the conditions shown in the following Table 3 using the same melt spinning apparatus as Example 1 (narrow pore nozzle: 210 pores, pore diameter: 0.23 mm, outer diameter: 130 mm). The results of subsequently evaluating the resulting yarn are shown in Table 3. In Example 11, three yarn breakages occurred during the first six hours of spinning.

<Example 12>

Using 1500 g for the weight of the raw material monomers, a polymer was polymerized in the same manner as Example 1 using the composition and conditions of the following Table 1, and the resulting polyamide was dried with a vacuum dryer and adjusted to a moisture content of 500 ppm.

The dried polyamide was spun and drawn under the conditions shown in the following Table 3 using the same melt spinning apparatus as Example 1 (narrow pore nozzle: 210 holes, pore diameter: 0.23 mm, outer diameter: 130 mm). The results of subsequently evaluating the resulting yarn are shown in Table 3. The resulting polyamide multifilament yarn had a high Tg and demonstrated superior yarn uniformity and spinning stability.

<Examples 13 and 14>

Using 1500 g for the weight of the raw material monomers, a polymer was polymerized in the same manner as Example 1 using the composition and conditions of the following Table 1, and the resulting polyamide was dried with a vacuum dryer and adjusted to a moisture content of 500 ppm.

The dried polyamide was spun and drawn under the conditions shown in the following Table 3 using the same melt spinning apparatus as Example 1 (narrow pore nozzle: 210 pores, pore diameter: 0.23 mm, outer diameter: 130 mm). The results of subsequently evaluating the resulting yarn are shown in Table 3. In Examples 13 and 14, the ratio of 1,10-decamethylenediamine in the diamine component was outside the range defined in the claims, thermal stability was somewhat poor, the surface of the spinneret was soiled, and the number of yarn breakages during the first six hours of spinning tended to increase.

<Example 15>

Using 1500 g for the weight of the raw material monomers, a polymer was polymerized in the same manner as Example 1 using the composition and conditions of the following Table 1, and the resulting polyamide was dried with a vacuum dryer and adjusted to a moisture content of 500 ppm.

The dried polyamide was spun and drawn under the conditions shown in the following Table 3 using the same melt spinning apparatus as Example 1 (narrow pore nozzle: 210 pores, pore diameter: 0.23 mm, outer diameter: 130 mm). The results of subsequently evaluating the resulting yarn are shown in Table 3. In Example 15, the number of yarn breakages during the first six hours of spinning tended to increase.

<Example 16>

Initial twists in the Z direction at 390 twists/m and final twists in the S direction at 390 twists/m (twist factor: 20637) were added to the polyamide filament fiber obtained in Example 1 followed by twisting to 1400/2 to obtain a cord. 3000 of each cord were aligned to form the warp yarn followed by driving in weft yarn composed of spun cotton yarn at an interval of 4/5 cm to obtain a cord fabric.

Next, after immersing the aforementioned cord fabric in an RFL solution consisting of resorcin, formalin and rubber latex, the fabric was dried for 120 seconds at 160°C followed by subjecting to drawing heat treatment and relaxation heat treatment for 60 seconds at 223°C. Moreover, this cord fabric was then used as a cap ply material to produce a (pneumatic) radial tire (tire size: 225/60R16) by an ordinary method. The physical properties of the resulting polyamide multifilament yarn, physical properties of the cord composing the cord fabric, and characteristics of the tire using that cord are collectively shown in the following Table 5. In Example 16, the polyamide multifilament yarn had a high level of rubber adhesion and favorable flat spot resistance in comparison with the Nylon 66 of Comparative Example 16.

<Example 17>

The polyamide multifilament fiber obtained in Example 2 was drawn to 1400 dtex and subjected to twisting, RFL treatment and tire processing in the same manner as Example 16 followed by measurement of physical properties. The physical properties of the resulting polyamide multifilament yarn, physical properties of the cord composing the cord fabric, and characteristics of the tire using that cord are collectively shown in the following Table 5. In Example 17, the polyamide multifilament yarn had a high level of rubber adhesion and favorable flat spot resistance in comparison with the Nylon 66 of Comparative Example 16.

<Example 18>

The polyamide multifilament yarn obtained in Example 4 was drawn to 1400 dtex and subjected to twisting, RFL treatment and tire processing in the same manner as Example 16 followed by measurement of physical properties. The physical properties of the resulting polyamide multifilament yarn, physical properties of the cord composing the cord fabric, and characteristics of the tire using that cord are collectively shown in the following Table 5. In Example 18, the polyamide multifilament yarn had a high level of rubber adhesion and favorable flat spot resistance in comparison with the Nylon 66 of Comparative Example 16.

<Example 19>

The polyamide multifilament yarn obtained in Example 8 was drawn to 1400 dtex and subjected to twisting, RFL treatment and tire processing in the same manner as Example 16 followed by measurement of physical properties. The physical properties of the resulting polyamide multifilament fiber, physical properties of the cord composing the cord fabric, and characteristics of the tire using that cord are collectively shown in the following Table 5. In Example 19, the polyamide multifilament yarn had a high level of rubber adhesion and favorable flat spot resistance in comparison with the Nylon 66 of Comparative Example 16.

<Example 20>

The polyamide multifilament yarn obtained in Example 11 was drawn to 1400 dtex and subjected to twisting, RFL treatment and tire processing in the same manner as Example 16 followed by measurement of physical properties. The physical properties of the resulting polyamide multifilament yarn, physical properties of the cord composing the cord fabric, and characteristics of the tire using that cord are collectively shown in the following Table 5. In Example 20, the polyamide multifilament yarn had a high level of rubber adhesion and favorable flat spot resistance in comparison with the Nylon 66 of Comparative Example 16.

<Example 21>

The polyamide multifilament yarn obtained in Example 12 was drawn to 1400 dtex and subjected to twisting, RFL treatment and tire processing in the same manner as Example 16 followed by measurement of physical properties. The physical properties of the resulting polyamide multifilament yarn, physical properties of the cord composing the cord fabric, and characteristics of the tire using that cord are collectively shown in the following Table 5. In Example 21, the polyamide multifilament yarn had a high level of rubber adhesion and favorable flat spot resistance in comparison with the Nylon 66 of Comparative Example 16.

<Example 22>

The polyamide multifilament yarn obtained in Example 13 was drawn to 1400 dtex and subjected to twisting, RFL treatment and tire processing in the same manner as Example 16 followed by measurement of physical properties. The physical properties of the resulting polyamide multifilament yarn, physical properties of the cord composing the cord fabric, and characteristics of the tire using that cord are collectively shown in the following Table 5. In Example 22, the polyamide multifilament yarn had a high level of rubber adhesion and favorable flat spot resistance in comparison with the Nylon 66 of Comparative Example 16.

<Example 23>

The polyamide multifilament yarn obtained in Example 14 was drawn to 1400 dtex and subjected to twisting, RFL treatment and tire processing in the same manner as Example 16 followed by measurement of physical properties. The physical properties of the resulting polyamide multifilament yarn, physical properties of the cord composing the cord fabric, and characteristics of the tire using that cord are collectively shown in the following Table 5. In Example 23, the polyamide multifilament yarn had a high level of rubber adhesion and favorable flat spot resistance in comparison with the Nylon 66 of Comparative Example 16.

<Example 24>

The polyamide multifilament yarn obtained in Example 15 was drawn to 1400 dtex and subjected to twisting, RFL treatment and tire processing in the same manner as Example 16 followed by measurement of physical properties. The physical properties of the resulting polyamide multifilament yarn, physical properties of the cord composing the cord fabric, and characteristics of the tire using that cord are collectively shown in the following Table 5. In Example 24, the polyamide multifilament yarn had a high level of rubber adhesion and favorable flat spot resistance in comparison with the Nylon 66 of Comparative Example 16.

<Comparative Example 1>

Using 1500 g for the weight of the raw material monomers, a polymer was polymerized in the same manner as Example 1 using the composition and conditions of the following Table 2, and the resulting polyamide was dried with a vacuum dryer and adjusted to a moisture content of 500 ppm.
The dried polyamide was spun and drawn under the conditions shown in the following Table 4 using the same melt spinning apparatus as Example 2 (narrow pore nozzle: 72 pores, pore diameter: 0.23 mm, outer diameter: 130 mm). The results of subsequently evaluating the resulting yarn are shown in Table 4. The use of Nylon 66 for the yarn resulted in a low Tg value.

<Comparative Example 2>

Using 1500 g for the weight of the raw material monomers, a polymer was polymerized in the same manner as Example 1 using the composition and conditions of the following Table 2, and the resulting polyamide was dried with a vacuum dryer and adjusted to a moisture content of 500 ppm.
The dried polyamide was spun under conditions of a spinning temperature of 350°C using a narrow pore nozzle (number of pores: 1, pore diameter: 0.23 mm, outer diameter: 20 mm). Subsequently, after cooling at a cold air blowing rate of 0.9 m/s, a finishing agent was applied at 1.0% by weight to the wound fiber. Next, the polyamide was drawn to 65% of the total draw ratio at a cold drawing temperature of 155°C followed by additionally drawing at a hot drawing temperature of 220°C and winding with a monofilament winder. The results of subsequently evaluating the resulting yarn are shown in the following Table 4. In Comparative Example 2, although a high-strength monofilament was able to be obtained in a short period of time, it was unable to be spun with sufficient stability for an extended period of time due to decomposition of the polymer.

<Comparative Example 3>

Using 1500 g for the weight of the raw material monomers, a polymer was polymerized in the same manner as Example 1 using the composition and conditions of the following Table 2, and the resulting polyamide was dried with a vacuum dryer and adjusted to a moisture content of 500 ppm.

The dried polyamide was spun and drawn under the conditions shown in the following Table 4 using the same melt spinning apparatus as Example 2 (narrow pore nozzle: 72 pores, pore diameter: 0.23 mm, outer diameter: 130 mm). The results of subsequently evaluating the resulting fiber are shown in Table 4. The polymer was more susceptible to the effects of polymer composition due to an increase in the number of monofilaments relative to Comparative Example 2, the number of yarn breakages increased in a short period of time, and the polymer was unable to be spun for an extended period of time. In addition, strength and yarn uniformity also ended up being inadequate due to uneven discharge accompanying polymer decomposition.

<Comparative Example 4>

Using 1500 g for the weight of the raw material monomers, a polymer was polymerized in the same manner as Example 1 using the composition and conditions of the following Table 2, and the resulting polyamide was dried with a vacuum dryer and adjusted to a moisture content of 500 ppm.

The dried polyamide was spun and drawn under the conditions shown in the following Table 4 using the same melt spinning apparatus as Example 2 (narrow pore nozzle: 72 pores, pore diameter: 0.23 mm, outer diameter: 130 mm). The results of subsequently evaluating the resulting yarn are shown in Table 4. In Comparative Example 4, the ratio of 1,10-decamethylenediamine in the diamine component was outside the range defined in the claims, melting point was excessively high, and spinnability and yarn uniformity were poor.

<Comparative Example 5>

Using 1500 g for the weight of the raw material monomers, a polymer was polymerized in the same manner as Example 1 using the composition and conditions of the following Table 2, and the resulting polyamide was dried with a vacuum dryer and adjusted to a moisture content of 500 ppm.

The dried polyamide was spun and drawn under the conditions shown in the following Table 4 using the same melt spinning apparatus as Example 2 (narrow pore nozzle: 72 pores, pore diameter: 0.23 mm, outer diameter: 130 mm). The results of subsequently evaluating the resulting fiber are shown in Table 4. In Comparative Example 5, the ratios of 1,10-decamethylenediamine and 2-methylpentamethylenediamine in the diamine component were outside the ranges defined in the claims, thermal stability decreased, decreases in molecular weight progressed due to self-cyclization of the 2-methylpentamethylenediamine, there were numerous yarn breakages and fiber uniformity was also poor.

<Comparative Example 6>

Using 1500 g for the weight of the raw material monomers, a polymer was polymerized in the same manner as Example 1 using the composition and conditions of the following Table 2, and the resulting polyamide was dried with a vacuum dryer and adjusted to a moisture content of 500 ppm.

The dried polyamide was spun and drawn under the conditions shown in the following Table 4 using the same melt spinning apparatus as Example 4 (narrow pore nozzle: 140 pores, pore diameter: 0.23 mm, outer diameter: 130 mm). The results of subsequently evaluating the resulting yarn are shown in Table 4. In Comparative Example 6, the ratio of alicyclic dicarboxylic acid in the dicarboxylic acid component was outside the range defined in the claims, Tg was low and there were numerous yarn breakages during the first six hours of spinning.

<Comparative Example 7>

Using 1500 g for the weight of the raw material monomers, a polymer was polymerized in the same manner as Example 1 using the composition and conditions of the following Table 2, and the resulting polyamide was dried with a vacuum dryer and adjusted to a moisture content of 500 ppm.

The dried polyamide was spun and drawn under the conditions shown in the following Table 4 using the same melt spinning apparatus as Example 2 (narrow pore nozzle: 72 pores, pore diameter: 0.23 mm, outer diameter: 130 mm). The results of subsequently evaluating the resulting yarn are shown in Table 4. In Comparative Example 7, the ratio of 1,10-decamethylenediamine in the diamine component was outside the range defined in the claims, melting point was excessively high and both spinnability and yarn uniformity were poor.

<Comparative Example 8>

Using 1500 g for the weight of the raw material monomers, a polymer was polymerized in the same manner as Example 1 using the composition and conditions of the following Table 2, and the resulting polyamide was dried with a vacuum dryer and adjusted to a moisture content of 500 ppm.

The dried polyamide was spun and drawn under the conditions shown in the following Table 4 using the same melt spinning apparatus as Example 4 (narrow pore nozzle: 140 pores, pore diameter: 0.23 mm, outer diameter: 130 mm). The results of subsequently evaluating the resulting yarn are shown in Table 4. In Comparative Example 8, the ratio of 1,10-decamethylenediamine in the diamine component was outside the range defined in the claims, melting point was excessively high, and both spinnability and yarn uniformity were poor.

<Comparative Example 9>

Using 1500 g for the weight of the raw material monomers, a polymer was polymerized in the same manner as Example 1 using the composition and conditions of the following Table 2, and the resulting polyamide was dried with a vacuum dryer and adjusted to a moisture content of 500 ppm.

The dried polyamide was spun and drawn under the conditions shown in the following Table 4 using the same melt spinning apparatus as Example 4 (narrow pore nozzle: 140 pores, pore diameter: 0.23 mm, outer diameter: 130 mm). The results of subsequently evaluating the resulting yarn are shown in Table 3. In Comparative Example 9, the ratio of alicyclic dicarboxylic acid in the dicarboxylic acid component was outside the range defined in the claims, Tg was low and there were numerous yarn breakages during the first six hours of spinning.

<Comparative Example 10>

Using 1500 g for the weight of the raw material monomers, a polymer was polymerized in the same manner as Example 1 using the composition and conditions of the following Table 2, and the resulting polyamide was dried with a vacuum dryer and adjusted to a moisture content of 500 ppm.

The dried polyamide was spun and drawn under the conditions shown in the following Table 4 using the same melt spinning apparatus as Example 2 (narrow pore nozzle: 72 pores, pore diameter: 0.23 mm, outer diameter: 130 mm). The results of subsequently evaluating the resulting yarn are shown in Table 4. In Comparative Example 10, due to the absence of a spinneret heater, a uniform spinneret surface temperature was unable to be maintained, uneven discharge occurred, spinning was difficult, and both strength and yarn uniformity were poor.

<Comparative Example 11>

Using 1500 g for the weight of the raw material monomers, a polymer was polymerized in the same manner as Example 1 using the composition and conditions of the following Table 2, and the resulting polyamide was dried with a vacuum dryer and adjusted to a moisture content of 500 ppm.

The dried polyamide was spun and drawn under the conditions shown in the following Table 4 using the same melt spinning apparatus as Example 2 (narrow pore nozzle: 72 pores, pore diameter: 0.23 mm, outer diameter: 130 mm). The results of subsequently evaluating the resulting yarn are shown in Table 4. In Comparative Example 11, the temperature of the spinneret heater was excessively high at 400°C, polymer degradation occurred, spinning was difficult, and both strength and yarn uniformity were poor.

<Comparative Example 12>

Using 1500 g for the weight of the raw material monomers, a polymer was polymerized in the same manner as Example 1 using the composition and conditions of the following Table 2, and the resulting polyamide was dried with a vacuum dryer and adjusted to a moisture content of 500 ppm.

The dried polyamide was spun and drawn under the conditions shown in the following Table 4 using the same melt spinning apparatus as Example 2 (narrow pore nozzle: 72 pores, pore diameter: 0.23 mm, outer diameter: 130 mm). The results of subsequently evaluating the resulting yarn are shown in Table 4. In Comparative Example 12, thread-forming properties and orientational relaxation were inhibited, spinning was difficult, and both strength and yarn uniformity were poor.

<Comparative Example 13>

Using 1500 g for the weight of the raw material monomers, a polymer was polymerized in the same manner as Example 1 using the composition and conditions of the following Table 2, and the resulting polyamide was dried with a vacuum dryer and adjusted to a moisture content of 500 ppm.

The dried polyamide was spun and drawn under the conditions shown in the following Table 4 using the same melt spinning apparatus as Example 2 (narrow pore nozzle: 72 pores, pore diameter: 0.23 mm, outer diameter: 130 mm). The results of subsequently evaluating the resulting fiber are shown in Table 4. In Comparative Example 13, since one-stage drawing was carried out instead of cold drawing, strength and fiber uniformity were both poor.

<Comparative Example 14>

Using 1500 g for the weight of the raw material monomers, a polymer was polymerized in the same manner as Example 1 using the composition and conditions of the following Table 2, and the resulting polyamide was dried with a vacuum dryer and adjusted to a moisture content of 500 ppm.

The dried polyamide was spun and drawn under the conditions shown in the following Table 4 using the same melt spinning apparatus as Example 2 (narrow pore nozzle: 72 pores, pore diameter: 0.23 mm, outer diameter: 130 mm). The results of subsequently evaluating the resulting yarn are shown in Table 4. In Comparative Example 14, hot drawing temperature was low, there was an inadequate amount of heat, and strength and fiber uniformity were both poor.

<Comparative Example 15>

Using 1500 g for the weight of the raw material monomers, a polymer was polymerized in the same manner as Example 1 using the composition and conditions of the following Table 2, and the resulting polyamide was dried with a vacuum dryer and adjusted to a moisture content of 500 ppm.

The dried polyamide was spun and drawn under the conditions shown in the following Table 4 using the same melt spinning apparatus as Example 2 (narrow pore nozzle: 72 pores, pore diameter: 0.23 mm, outer diameter: 130 mm). The results of subsequently evaluating the resulting yarn are shown in Table 4. In Comparative Example 15, the ratio of 1,4-cyclohexanedicarboxylic acid in the dicarboxylic acid component was low at 20 mol% and Tg was also low.

<Comparative Example 16>

The polyamide multifilament yarn obtained in Comparative Example 1 was drawn to 1400 dtex and subjected to twisting, RFL treatment and tire processing in the same manner as Example 16 followed by measurement of physical properties. The physical properties of the resulting polyamide multifilament yarn, physical properties of the cord composing the cord fabric, and characteristics of the tire using that cord are collectively shown in the following Table 5. In Comparative Example 16, Nylon 66 was used for the tire and tire cord.

<Comparative Example 17>

The polyamide multifilament yarn obtained in Comparative Example 14 was drawn to 1400 dtex and subjected to twisting, RFL treatment and tire processing in the same manner as Example 16 followed by measurement of physical properties. The physical properties of the resulting polyamide multifilament yarn, physical properties of the cord composing the cord fabric, and characteristics of the tire using that cord are collectively shown in the following Table 5. In Comparative Example 17, since the ratio of 1,4-cyclohexanedicarboxylic acid was low and the value of E' (120°C)/E' (25°C) was also low, there was no large difference with the flat spot index relative to Nylon 66 of Comparative Example 16.

<Comparative Example 18>

PET polyamide multifilament yarn was drawn to 1400 dtex and subjected to twisting, RFL treatment and tire processing in the same manner as Example 16 followed by measurement of physical properties. The physical properties of the resulting polyamide multifilament yarn, physical properties of the cord composing the cord fabric, and characteristics of the tire using that cord are collectively shown in the following Table 5. In Comparative Example 18, although the flat spot index relative to the Nylon 66 of Comparative Example 16 was favorable, rubber adhesion was weak and durability was poor.

[Table 1]

| Composition | | | Ex. 1 | Ex. 2 | Ex. 3 | Ex. 4 | Ex. 5 | Ex. 6 | Ex.7 | Ex. 8 | Ex. 9 | Ex. 10 | Ex. 11 | Ex. 12 | Ex. 13 | Ex. 14 | Ex. 15 |
|---|---|---|---|---|---|---|---|---|---|---|---|---|---|---|---|---|---|
| Ratio in di-carboxylic acid com-ponent | 1,4-cy-clohex-ane-dicar-boxlyic acid | Mol% | 100 | 100 | 100 | 100 | 100 | 85 | 100 | 100 | 100 | 85 | 100 | 80 | 60 | 75 | 100 |
| | Adipic acid | Mol% | | | | | | 15 | | | | 15 | | | 40 | 25 | |
| | Sebacic acid | Mol% | | | | | | | | | | | | 20 | | | |
| Ratio in di-amine com-ponent | 1,4-te-tramethyl-enedi-amine (C4DA | Mol% | | | | | | | | | | | | | 40 | | |
| | 1,5-pen-tamethyl-enedi-amine (C5DA) | Mol% | | | | | | | | | | | 40 | | | | |
| | 2-methyl-pentame-thylenedi-amine (2MC5DA) | Mol% | 60 | 50 | 40 | 30 | 10 | 35 | 40 | 35 | 30 | | | | | | |
| | 1,6-hex-amethyl-enedi-amine (C6DA) | Mol% | | | | | | 15 | | | | 40 | | 20 | | 25 | |

(continued)

| | | | | Ex. 1 | Ex. 2 | Ex. 3 | Ex. 4 | Ex. 5 | Ex. 6 | Ex.7 | Ex. 8 | Ex. 9 | Ex. 10 1 | Ex. 11 | Ex. 12 | Ex. 13 | Ex. 14 | Ex. 15 |
|---|---|---|---|---|---|---|---|---|---|---|---|---|---|---|---|---|---|---|
| | | 1,8-oc-tamethyl-enedi-amine (C8DA) | Mol% | | | | | | | | | | | | | | 75 | |
| | | 1,10-decame-thylenedi-amine (C10DA) | Mol% | 40 | 50 | 60 | 70 | 90 | 50 | 60 | 65 | 70 | 60 | 60 | 80 | | | 100 |
| | | 1,12-do-decame-thylenedi-amine (C12DA) | Mol% | | | | | | | | | | | | | 60 | | |
| | Ratio in all materials | ε-Caproactam | Mol% | | | | | | | | | | | | | | | 5 |
| Additives | Added diamine | | Type | C10DA | C10DA | C10DA | C10DA | C10DA | C10DA | C10DA | C10DA | C10DA | C10DA | C10DA | C10DA | C12DA | C8DA | C10DA |
| | Amt. added based on all diamines | | % | 2.1 | 2.1 | 2.0 | 2.2 | 2.0 | 2.0 | 2.0 | 2.0 | 2.0 | 2.0 | 2.1 | 2.3 | 2.1 | 2.0 | 2.5 |
| Polymeriza-tion condi-tions | Polymerization meth-od | | - | Melt | Melt | Melt | Melt | Melt | Melt | Melt | Melt | Melt | Melt | Melt | Melt | Melt | Melt | Melt |
| | Final temperature of melt polymerization | | °C | 310 | 320 | 330 | 340 | 360 | 320 | 340 | 340 | 330 | 330 | 330 | 340 | 340 | 350 | 360 |

[Table 2]

| | | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 | Comp. Ex. 10 | Comp. Ex. 11 | Comp. Ex. 12 | Comp. Ex. 13 | Comp. Ex. 14 | Comp. Ex.15 |
|---|---|---|---|---|---|---|---|---|---|---|---|---|---|---|---|---|---|
| Composition | Ratio in dicarboxylic acid component | cyclohexane-dicarboxlyic acid | Mol% | | 100 | 100 | 100 | 100 | 40 | 100 | 100 | 40 | 100 | 100 | 100 | 100 | 100 | 20 |
| | | Adipic acid | Mol% | 100 | | | | | 60 | | | 60 | | | | | | 80 |
| | | Sebacic acid | Mol% | | | | | | | | | | | | | | | |
| | Ratio in diamine component | 1,4-tetramethylenediamine (C4DA | Mol% | | | | | | | | | | | | | | | |
| | | 1,5-pentamethylenediamine (C5DA) | Mol% | | | | | | | | | | | | | | | |
| | | 2-methylpentamethylenediamine (2MC5DA) | Mol% | | 100 | 100 | 50 | 90 | 20 | | | | 50 | 50 | 50 | 50 | 50 | |
| | | 1,6-hexamethylenediamine (C6DA) | Mol% | 100 | | | 50 | | 60 | 90 | 10 | 80 | | | | | | 80 |

EP 3 093 379 B1

(continued)

| | | | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 | Comp. Ex. 10 | Comp. Ex. 11 | Comp. Ex. 12 | Comp. Ex. 13 | Comp. Ex. 14 | Comp. Ex.15 |
|---|---|---|---|---|---|---|---|---|---|---|---|---|---|---|---|---|---|---|
| | | 1,8-oc-tamethyl-enedi-amine (C8DA) | Mol% | | | | | | | | | | | | | | | |
| | | 1,10-decame-thylenedi-amine (C10DA) | Mol% | | | | | 10 | 20 | 10 | 90 | 20 | 50 | 50 | 50 | 50 | 50 | 20 |
| | | 1,12-do-decame-thylenedi-amine (C12DA) | Mol% | | | | | | | | | | | | | | | |
| | Ratio in all materials | ε-Caprolactam | Mol% | | | | | | | | | | | | | | | |
| Additives | Added diamine | | Type | C6DA | 2MC5DA | z2MC5DA | 2MC5DA | 2MC5DA | C6DA | C6DA | C10DA | C6DA | C10DA | C10DA | C10DA | C10DA | C10DA | C6DA |
| | Amt. added based on all diamines | | % | 2.0 | 2.0 | 2.0 | 2.0 | 2.0 | 2.0 | 2.0 | 2.0 | 2.0 | 2.0 | 2.0 | 2.0 | 2.0 | 1.9 | 2.0 |
| Polymeriza-tion condi-tions | Polymerization meth-od | | - | Melt | Melt | Melt | Melt | Melt | Melt | Melt | Melt | Melt | Melt | Melt | Melt | Melt | Melt | Melt |
| | Final temperature of melt polymerization | | °C | 300 | 360 | 360 | 370 | 360 | 310 | 380 | 370 | 310 | 320 | 320 | 320 | 320 | 320 | 310 |

[Table 3]

| | | | Ex. 1 | Ex.2 | Ex.3 | Ex. 4 | Ex.5 | Ex. 6 | Ex.7 | Ex. 8 | Ex.9 | Ex. 10 | Ex. 11 | Ex.12 | Ex.13 | Ex.14 | Ex. 15 |
|---|---|---|---|---|---|---|---|---|---|---|---|---|---|---|---|---|---|
| Spinning Conditions | Fineness | dtex | 1400 | 470 | 470 | 940 | 940 | 940 | 470 | 470 | 940 | 940 | 1400 | 1400 | 1400 | 1400 | 1400 |
| | No. of filaments | | 210 | 72 | 72 | 140 | 140 | 140 | 72 | 72 | 140 | 140 | 210 | 210 | 210 | 210 | 210 |
| | Spinning temp. (°C) (discharge temp.) | °C | 305 | 320 | 330 | 340 | 360 | 320 | 340 | 340 | 340 | 330 | 330 | 340 | 340 | 345 | 350 |
| | Spinneret heater | °C | 305 | 320 | 330 | 340 | 360 | 320 | 340 | 340 | 340 | 330 | 330 | 340 | 340 | 345 | 350 |
| | Heat sleeve | °C | 120 | 120 | 120 | 120 | 120 | 120 | 120 | 120 | 120 | 120 | 120 | 120 | 120 | 120 | 120 |
| | Predrawing temp. | °C | 140 | 138 | 139 | 140 | 150 | 133 | 125 | 122 | 117 | 127 | 134 | 103 | 102 | 103 | 113 |
| | Cold draw allocation | % | 65 | 65 | 65 | 65 | 65 | 65 | 65 | 65 | 65 | 65 | 65 | 65 | 65 | 65 | 65 |
| | Hot drawing temp. | °C | 220 | 220 | 220 | 220 | 220 | 220 | 220 | 220 | 220 | 220 | 220 | 220 | 220 | 220 | 220 |

(continued)

|  |  |  | Ex. 1 | Ex.2 | Ex.3 | Ex. 4 | Ex.5 | Ex. 6 | Ex.7 | Ex. 8 | Ex.9 | Ex. 10 | Ex. 11 | Ex.12 | Ex.13 | Ex.14 | Ex. 15 |
|---|---|---|---|---|---|---|---|---|---|---|---|---|---|---|---|---|---|
| Fiber | ηr |  | 2.24 | 2.24 | 2.26 | 2.23 | 2.06 | 2.23 | 2.28 | 2.27 | 2.10 | 2.23 | 2.25 | 2.24 | 2.25 | 2.26 | 2.23 |
|  | Tg | °C | 155 | 156 | 159 | 154 | 165 | 128 | 138 | 143 | 133 | 122 | 159 | 118 | 111 | 118 | 128 |
|  | Tm | °C | 263 | 280 | 290 | 298 | 328 | 277 | 296 | 296 | 294 | 288 | 292 | 300 | 305 | 315 | 328 |
|  | Spinneret surface soiling |  | A | A | A | A | c | A | A | A | A | A | A | A | B | B | A |
|  | Initial yarn breakage |  | A | A | A | A | B | A | A | A | A | A | A | A | A | A | A |
|  | Time-based yarn breakage |  | A | A | A | A | C | A | A | A | A | A | B | A | B | B | B |
|  | Mw/Mn |  | 2.3 | 2.2 | 2.4 | 2.4 | 5.7 | 2.5 | 3.2 | 3.0 | 3.1 | 2.9 | 2.4 | 2.8 | 3.1 | 3.3 | 2.9 |
|  | Cross ratio |  | 1.08 | 1.10 | 1.05 | 1.13 | 1.34 | 1.19 | 1.05 | 1.18 | 1.21 | 1.17 | 1.28 | 1.1 | 1.31 | 1.35 | 1.25 |
|  | U% |  | 1.1 | 1.0 | 1.0 | 1.1 | 1.4 | 1.1 | 1.0 | 1.0 | 1.1 | 1.1 | 1.1 | 1.0 | 1.2 | 1.2 | 1.1 |
|  | Strength | cN/dtex | 6.5 | 7.2 | 6.8 | 6.5 | 4.3 | 6.5 | 4.2 | 4.8 | 4.3 | 4.5 | 6.9 | 6.0 | 6.8 | 7.0 | 6.6 |
|  | Δn |  | 0.0551 | 0.0568 | 0.0546 | 0.0542 | 0.0487 | 0.0550 | 0.0498 | 0.0510 | 0.0500 | 0.0513 | 0.0559 | 0.0521 | 0.0556 | 0.0564 | 0.0548 |
|  | of No. of interlaces | Count | 8 | 8 | 8 | 8 | 8 | 8 | 8 | 8 | 8 | 8 | 8 | 8 | 8 | 8 | 8 |
|  | 200°C strength retention rate | % |  |  |  |  |  |  | 94 | 93 | 91 | 88 |  |  |  |  |  |

[Table 4]

| | | | Comp. Ex.1 | Comp. Ex.2 | Comp. Ex.3 | Comp. Ex.4 | Comp. Ex.5 | Comp. Ex.6 | Comp. Ex.7 | Comp. Ex.8 | Comp. Ex.9 | Comp. Ex.10 | Comp. Ex.11 | Comp. Ex.12 | Comp. Ex.13 | Comp. Ex.14 | Comp. Ex.15 |
|---|---|---|---|---|---|---|---|---|---|---|---|---|---|---|---|---|---|
| | Fineness | dtex | 470 | 8 | 470 | 470 | 470 | 940 | 470 | 940 | 940 | 470 | 470 | 470 | 470 | 470 | 470 |
| | No. of filaments | | 72 | 1 | 72 | 72 | 72 | 140 | 72 | 140 | 140 | 72 | 72 | 72 | 72 | 72 | 72 |
| | Spinning temp. (°C) (discharge temp.) | °C | 300 | 350 | 360 | 375 | 355 | 305 | 380 | 370 | 308 | 320 | 320 | 320 | 320 | 320 | 305 |
| Spinning Conditions | Spinneret heater | °C | -- | 350 | 360 | 375 | 355 | 305 | 380 | 370 | 308 | -- | 400 | 320 | 320 | 320 | 305 |
| | Heat sleeve | °C | -- | 120 | 120 | 120 | 120 | 120 | 120 | 120 | 120 | 120 | 120 | -- | 120 | 120 | 120 |
| | Predrawing temp. | °C | 65 | 155 | 155 | 147 | 145 | 75 | 146 | 142 | 78 | 80 | 80 | 138 | 138 | 138 | 60 |
| | Cold draw allocation | % | 65 | 65 | 65 | 65 | 65 | 65 | 65 | 65 | 65 | 65 | 65 | 65 | 0 | 65 | 65 |
| | Hot drawing temp. | °C | 220 | 220 | 220 | 220 | 220 | 220 | 220 | 220 | 220 | 220 | 220 | 220 | 220 | 180 | 220 |

(continued)

|  |  | Comp. Ex.1 | Comp. Ex.2 | Comp. Ex.3 | Comp. Ex.4 | Comp. Ex.5 | Comp. Ex.6 | Comp. Ex.7 | Comp. Ex.8 | Comp. Ex.9 | Comp. Ex.10 | Comp. Ex.11 | Comp. Ex.12 | Comp. Ex.13 | Comp. Ex.14 | Comp. Ex.15 |
|---|---|---|---|---|---|---|---|---|---|---|---|---|---|---|---|---|
|  | ηr | 2.98 | 2.25 | 1.57 | 1.98 | 1.65 | 2.12 | 2.00 | 2.12 | 2.18 | 2.24 | 1.75 | 2.24 | 2.24 | 2.24 | 2.10 |
|  | Tg °C | 50-80 | 170 | 170 | 162 | 161 | 91 | 161 | 157 | 93 | 156 | 156 | 156 | 156 | 156 | 73 |
|  | Tm °C | 260 | 325 | 325 | 332 | 320 | 268 | 340 | 330 | 268 | 280 | 280 | 280 | 280 | 280 | 265 |
|  | Spinneret surface soiling | A | A | C | C | C | A | C | C | A | A | A | A | A | A | A |
|  | Initial yarn breakage | A | A | B | B | B | B | B | B | B | C | C | C | A | A | B |
|  | Time-based yarn breakage | A | C | C | C | C | C | C | C | C | C | C | C | A | A | B |
| Fiber | Mw/Mn | 2.1 | 2.4 | 4.6 | 4.2 | 3.3 | 2.3 | 6.7 | 5.6 | 2.2 | 2.2 | 2.2 | 2.2 | 2.2 | 2.2 | 2.4 |
|  | Cross ratio | 1.07 | -- | 2.03 | 2.21 | 1.88 | 1.13 | 2.13 | 1.97 | 1.03 | 1.82 | 1.98 | 1.72 | 1.62 | 1.73 | 1.15 |
|  | U% | 1.0 | 1.5 | 3.8 | 3.4 | 3.2 | 1.2 | 4.4 | 3.5 | 1.0 | 3.2 | 3.8 | 3.4 | 2.6 | 2.8 | 1.8 |
|  | Strength cN/dtex | 8.0 | 7.0 | 4.1 | 4.0 | 4.7 | 5.9 | 2.8 | 3.1 | 4.5 | 5.9 | 3.8 | 4.2 | 3.5 | 3.3 | 6.8 |
|  | Δn | 0.0613 | 0.0564 | 0.0420 | 0.0412 | 0.0498 | 0.0524 | 0.0312 | 0.0387 | 0.0462 | 0.0531 | 0.0395 | 0.0425 | 0.0394 | 0.0386 | 0.0541 |
|  | No. of interlaces Count | 8 | 8 | 8 | 8 | 8 | 8 | 8 | 8 | 8 | 8 | 8 | 8 | 8 | 8 | 8 |
|  | 200°C strength retention rate % | 94 | 74 | 72 |  |  |  | 94 | 81 | 88 |  |  |  |  |  |  |

30

[Table 5]

| | | | Ex.16 | Ex.17 | Ex.18 | Ex.19 | Ex.20 | Ex.21 | Ex.22 | Ex.23 | Ex.24 | Comp. Ex. 16 | Comp. Ex. 17 | Comp. Ex. 18 |
|---|---|---|---|---|---|---|---|---|---|---|---|---|---|---|
| Fiber | E' (120°) /E' (25°) | % | 79 | 80 | 75 | 73 | 72 | 68 | 70 | 72 | 69 | 39 | 47 | 76 |
| | tan$\delta$ | °C | 180 | 182 | 175 | 159 | 162 | 152 | 161 | 168 | 159 | 118 | 125 | 142 |
| Cord | Initial rubber adhesion (PET: 1 and 2-stage DIP, others: 1-stage DIP) | N/cm | 192 | 191 | 190 | 190 | 192 | 186 | 191 | 194 | 188 | 193 | 190 | 1-stage DIP: 88/2-stage DIP: 149 |
| | Heat-resistant rubber adhesion (PET: 2-stage DIP, others: 1-stage DIP) | N/cm | 131 | 133 | 128 | 130 | 132 | 122 | 129 | 130 | 118 | 133 | 128 | 60 |
| | Strength | N | 169 | 193 | 161 | 132 | 180 | 156 | 177 | 182 | 171 | 213 | 172 | 195 |
| Tire | High-load drum durability | | A | A | A | A | A | A | A | A | A | A | A | C |
| | Flat spots | Index | 117 | 119 | 115 | 110 | 111 | 110 | 112 | 113 | 111 | 100 | 101 | 110 |

INDUSTRIAL APPLICABILITY

The polyamide multifilament yarn of the present invention has a high Tg and high strength and demonstrates superior spinning stability and fiber uniformity, and a tire cord using this fiber demonstrates superior rubber adhesion properties and is capable of imparting favorable dimensional stability to a tire at high temperatures.

BRIEF DESCRIPTION OF THE REFERENCE SYMBOLS

A Origin
B Endpoint
L Measured length
X Average value of yarn thickness over certain length
F Area defined by A-B
f Area defined by fluctuation in yarn thickness (unevenness curve) and X
1 Melt extruder
2 Spinning head
3 Spinning pack
4 Spinneret (nozzle)
5 Spinning heater
6 Heat sleeve (heating zone)
7 Cold air blower
8 Lubricating device
9 Take-off roller
10 First roller
11 Second roller
12 Third roller
13 Fourth roller
14 Interlacing device
15 Winder
Y Yarn

**Claims**

1.  A polyamide multifilament yarn comprising a polycondensate of a dicarboxylic acid component having an alicyclic dicarboxylic acid, and a diamine, which satisfies the following requirements:

    (a) the ratio of the alicyclic dicarboxylic acid to the entire dicarboxylic acid component is 50 mol% or more;
    (b) the total fineness of the polyamide multifilament yarn is 100 dtex or more;
    (c) the cross ratio (maximum diameter/minimum diameter) of the polyamide multifilament yarn, measured as described in the description, is 1.6 or less;
    (d) the melting point (Tm) of the polyamide multifilament yarn is 270°C to 350°C, and
    (e) the ratio of aromatic diamine to the entire diamine is 0 mol% to 10 mol%,
    (f) the ratio of aromatic dicarboxylic acid to the entire dicarboxylic acid is 0 mol% to 10 mol%,

    wherein the value of the ratio of the storage elastic modulus at 120°C (E'(120°C)) to the storage elastic modulus at 25°C (E'(25°C)), measured as described in the description, is 0.6 to 0.9.

2.  The polyamide multifilament yarn according to claim 1, wherein the sulfuric acid relative viscosity of the polyamide multifilament yarn, measured as described in the description, is 1.5 to 4.0.

3.  The polyamide multifilament yarn according to claim 1 or 2, which contains 1,10-decanediamine for the diamine component, and wherein the ratio of the 1,10-decanediamine to the entire diamine component is 20 mol% or more.

4.  The polyamide multifilament yarn according to any of claims 1 to 3, which contains a diamine having 5 or 6 carbon atoms for the diamine component, and wherein the ratio of the diamine having 5 or 6 carbon atoms to the entire diamine component is 20 mol% or more.

5. The polyamide multifilament yarn according to claim 4, wherein the diamine having 5 or 6 carbon atoms is 2-methylpentamethylenediamine.

6. The polyamide multifilament yarn according to claim 4, wherein the diamine having 5 or 6 carbon atoms is hexamethylenediamine.

7. The polyamide multifilament yarn according to any of claims 1 to 6, wherein the glass transition temperature (Tg) of the polyamide multifilament yarn, measurement as described in the description, is 90°C to 190°C.

8. The polyamide multifilament yarn according to any of claims 1 to 7, wherein U% of the polyamide multifilament yarn, measured as described in the description, is 3.0 or less.

9. The polyamide multifilament yarn according to any of claims 1 to 8, wherein $\Delta$n of the polyamide multifilament yarn, measured as described in the description, is 0.04 or more.

10. The polyamide multifilament fiber according to any of claims 1 to 9, wherein the number of filaments is 30 filaments of more.

11. The polyamide multifilament yarn according to any of claims 1 to 10, wherein filament fineness thereof is 7.0 dtex or less.

12. The polyamide multifilament yarn according to any of claims 1 to 11, wherein the fiber strength of the polyamide multifilament yarn, measured as described in the description, is 4 cN/dtex or more.

13. The polyamide multifilament yarn according to any of claims 1 to 12 which contains 1,4-cyclohexanedicarboxylic acid for the aliphatic dicarboxylic acid, and wherein the ratio of the trans isomer derived from the 1,4-cyclohexanedicarboxylic acid is 50% to 100%.

14. The polyamide multifilament yarn according to any of claims 1 to 13, wherein the peak temperature of the loss tangent (tan$\delta$), measured as described in the description, is 150°C to 200°C.

15. The polyamide multifilament yarn according to any of claims 1 to 14, which is treated with a resorcin-formalin-latex resin.

16. A tire cord comprising the polyamide multifilament yarn according to any of claims 1 to 15.

17. A twisted cord composed of the polyamide multifilament yarn according to any of claims 1 to 14.

18. The twisted cord according to claim 17, which is treated with a resorcin-formalin-latex resin.

19. A twisted cord composed of the polyamide multifilament yarn according to claim 15.

20. A cord fabric composed of the polyamide multifilament yarn according to any of claims 1 to 14 or the twisted cord according to claim 17.

21. The cord fabric according to claim 20, which is treated with a resorcin-formalin-latex resin.

22. A cord fabric composed of the polyamide multifilament yarn according to claim 15 or the cord according to claim 18 or 19.

23. A tire comprising the polyamide multifilament yarn according to any of claims 1 to 15, the cord according to any of claims 16 to 19, or the cord fabric according to any of claims 20 to 22.

24. The tire according to claim 23, wherein the polyamide multifilament yarn according to any of claims 1 to 15, the cord according to any of claims 17 to 20, or the cord fabric according to any of claims 20 to 22 is applied to a cap ply.

**Patentansprüche**

1. Polyamid-Multifilamentgarn, das ein Polykondensat aus einer Dicarbonsäurekomponente, die eine alicyclische Dicarbonsäure aufweist, und einem Diamin umfasst und den folgenden Anforderungen genügt:

   (a) das Verhältnis der alicyclischen Dicarbonsäure zu der gesamten Dicarbonsäurekomponente beträgt 50 Mol-% oder mehr;
   (b) die Gesamtfeinheit des Polyamid-Multifilamentgarns beträgt 100 dtex oder mehr;
   (c) das Querverhältnis (maximaler Durchmesser/minimaler Durchmesser) des Polyamid-Multifilamentgarns, das so gemessen wird, wie es in der Beschreibung beschrieben ist, beträgt 1,6 oder weniger;
   (d) der Schmelzpunkt (Tm) des Polyamid-Multifilamentgarns beträgt 270 °C bis 350 °C; und
   (e) das Verhältnis von aromatischem Diamin zum gesamten Diamin beträgt 0 Mol-% bis 10 Mol-%;
   (f) das Verhältnis von aromatischer Dicarbonsäure zu der gesamten Dicarbonsäure 0 Mol-% bis 10 Mol-%;

   wobei der Wert des Verhältnisses des elastischen Speichermoduls bei 120 °C (E'(120 °C)) zu dem elastischen Speichermodul bei 25 °C (E'(25 °C)), das so gemessen wird, wie es in der Beschreibung beschrieben ist, beträgt 0,6 bis 0,9.

2. Polyamid-Multifilamentgarn gemäß Anspruch 1, wobei die relative Viskosität des Polyamid-Multifilamentgarns in Schwefelsäure, die so gemessen wird, wie es in der Beschreibung beschrieben ist, 1,5 bis 4,0 beträgt.

3. Polyamid-Multifilamentgarn gemäß Anspruch 1 oder 2, das 1,10-Decandiamin als Diaminkomponente enthält, wobei das Verhältnis des 1,10-Decandiamins zu der gesamten Diaminkomponente 20 Mol-% oder mehr beträgt.

4. Polyamid-Multifilamentgarn gemäß einem der Ansprüche 1 bis 3, das ein Diamin mit 5 oder 6 Kohlenstoffatomen als Diaminkomponente enthält, wobei das Verhältnis des Diamins mit 5 oder 6 Kohlenstoffatomen zu der gesamten Diaminkomponente 20 Mol-% oder mehr beträgt.

5. Polyamid-Multifilamentgarn gemäß Anspruch 4, wobei es sich bei dem Diamin mit 5 oder 6 Kohlenstoffatomen um 2-Methylpentamethylendiamin handelt.

6. Polyamid-Multifilamentgarn gemäß Anspruch 4, wobei es sich bei dem Diamin mit 5 oder 6 Kohlenstoffatomen um Hexamethylendiamin handelt.

7. Polyamid-Multifilamentgarn gemäß einem der Ansprüche 1 bis 6, wobei die Glasübergangstemperatur (Tg) des Polyamid-Multifilamentgarns, die so gemessen wird, wie es in der Beschreibung beschrieben ist, 90 °C bis 190 °C beträgt.

8. Polyamid-Multifilamentgarn gemäß einem der Ansprüche 1 bis 7, wobei U% des Polyamid-Multifilamentgarns, das so gemessen wird, wie es in der Beschreibung beschrieben ist, 3,0 oder weniger beträgt.

9. Polyamid-Multifilamentgarn gemäß einem der Ansprüche 1 bis 8, wobei Δn des Polyamid-Multifilamentgarns, das so gemessen wird, wie es in der Beschreibung beschrieben ist, 0,04 oder mehr beträgt.

10. Polyamid-Multifilamentgarn gemäß einem der Ansprüche 1 bis 9, wobei die Anzahl der Filamente 30 Filamente oder mehr beträgt.

11. Polyamid-Multifilamentgarn gemäß einem der Ansprüche 1 bis 10, wobei seine Filamentfeinheit 7,0 dtex oder weniger beträgt.

12. Polyamid-Multifilamentgarn gemäß einem der Ansprüche 1 bis 11, wobei die Faserfestigkeit des Polyamid-Multifilamentgarns, die so gemessen wird, wie es in der Beschreibung beschrieben ist, 4 cN/dtex oder mehr beträgt.

13. Polyamid-Multifilamentgarn gemäß einem der Ansprüche 1 bis 12, das 1,4-Cyclohexandicarbonsäure als aliphatische Dicarbonsäure enthält, wobei das Verhältnis des von der 1,4-Cyclohexandicarbonsäure abgeleiteten trans-Isomers 50% bis 100% beträgt.

14. Polyamid-Multifilamentgarn gemäß einem der Ansprüche 1 bis 13, wobei die Peaktemperatur des Verlustfaktors

(tan $\delta$), die so gemessen wird, wie es in der Beschreibung beschrieben ist, 150 °C bis 200 °C beträgt.

15. Polyamid-Multifilamentgarn gemäß einem der Ansprüche 1 bis 14, das mit einem Resorcin-Formalin-Latex-Harz behandelt ist.

16. Reifencord, umfassend das Polyamid-Multifilamentgarn gemäß einem der Ansprüche 1 bis 15.

17. Gezwirnter Cord, bestehend aus dem Polyamid-Multifilamentgarn gemäß einem der Ansprüche 1 bis 14.

18. Gezwirnter Cord gemäß Anspruch 17, das mit einem Resorcin-Formalin-Latex-Harz behandelt ist.

19. Gezwirnter Cord, bestehend aus dem Polyamid-Multifilamentgarn gemäß Anspruch 15.

20. Cordstoff, bestehend aus dem Polyamid-Multifilamentgarn gemäß einem der Ansprüche 1 bis 14 oder dem gezwirnten Cord gemäß Anspruch 17.

21. Cordstoff gemäß Anspruch 20, der mit einem Resorcin-Formalin-Latex-Harz behandelt ist.

22. Cordstoff, bestehend aus dem Polyamid-Multifilamentgarn gemäß Anspruch 15 oder dem Cord gemäß Anspruch 18 oder 19.

23. Reifen, umfassend das Polyamid-Multifilamentgarn gemäß einem der Ansprüche 1 bis 15, den Cord gemäß einem der Ansprüche 16 bis 19 oder den Cordstoff gemäß einem der Ansprüche 20 bis 22.

24. Reifen gemäß Anspruch 23, wobei das Polyamid-Multifilamentgarn gemäß einem der Ansprüche 1 bis 15, der Cord gemäß einem der Ansprüche 17 bis 20 oder der Cordstoff gemäß einem der Ansprüche 20 bis 22 auf einen Zwischenbau aufgebracht wird.

**Revendications**

1. Fil multifilament de polyamide comprenant un polycondensat d'un constituant acide dicarboxylique présentant un acide dicarboxylique alicyclique, et une diamine, qui satisfait les exigences suivantes :

    (a) le rapport de l'acide dicarboxylique alicyclique au constituant acide dicarboxylique entier est de 50 % en mole ou supérieur ;
    (b) la finesse totale du fil multifilament de polyamide est de 100 dtex ou supérieure ;
    (c) le rapport transversal (diamètre maximal/diamètre minimal) du fil multifilament de polyamide, mesuré comme décrit dans la description, est de 1,6 ou inférieur ;
    (d) le point de fusion (Tm) du fil multifilament de polyamide est de 270°C à 350°C, et
    (e) le rapport de diamine aromatique à la diamine entière est de 0 % en mole à 10 % en mole,
    (f) le rapport d'acide dicarboxylique aromatique à l'acide dicarboxylique entier est de 0 % en mole à 10 % en mole,

dans lequel la valeur du rapport du module élastique au stockage à 120°C (E'(120°C)) au module élastique au stockage à 25°C (E'(25°C)), mesurée comme décrit dans la description est de 0,6 à 0,9.

2. Fil multifilament de polyamide selon la revendication 1, dans lequel la viscosité relative dans de l'acide sulfurique du fil multifilament de polyamide, mesurée comme décrit dans la description, est de 1,5 à 4,0.

3. Fil multifilament de polyamide selon la revendication 1 ou 2, lequel contient de la 1,10-décanediamine pour le constituant de diamine, et dans lequel le rapport de la 1,10-décanediamine au constituant de diamine entier est de 20 % en mole ou supérieur.

4. Fil multifilament de polyamide selon l'une quelconque des revendications 1 à 3, qui contient une diamine présentant 5 ou 6 atomes de carbone pour le constituant de diamine, et dans lequel le rapport de la diamine présentant 5 ou 6 atomes de carbone au constituant de diamine entier est de 20 % en mole ou supérieur.

5. Fil multifilament de polyamide selon la revendication 4, dans lequel la diamine présentant 5 ou 6 atomes de carbone est la 2-méthylpentaméthylènediamine.

6. Fil multifilament de polyamide selon la revendication 4, dans lequel la diamine présentant 5 ou 6 atomes de carbone est l'hexaméthylènediamine.

7. Fil multifilament de polyamide selon l'une quelconque des revendications 1 à 6, dans lequel la température de transition vitreuse (Tg) du fil multifilament de polyamide, mesurée comme décrit dans la description, est de 90°C à 190°C.

8. Fil multifilament de polyamide selon l'une quelconque des revendications 1 à 7, dans lequel U% du fil multifilament de polyamide, mesuré comme décrit dans la description, est de 3,0 ou inférieur.

9. Fil multifilament de polyamide selon l'une quelconque des revendications 1 à 8, dans lequel $\Delta n$ du fil multifilament de polyamide, mesuré comme décrit dans la description, est de 0,04 ou supérieur.

10. Fibre multifilament de polyamide selon l'une quelconque des revendications 1 à 9, dans laquelle le nombre de filaments est de 30 filaments ou supérieur.

11. Fil multifilament de polyamide selon l'une quelconque des revendications 1 à 10, dans lequel la finesse de filament de celui-ci est de 7,0 dtex ou inférieure.

12. Fil multifilament de polyamide selon l'une quelconque des revendications 1 à 11, dans lequel la résistance de fibre du fil multifilament de polyamide, mesurée comme décrit dans la description, est de 4 cN/dtex ou supérieure.

13. Fil multifilament de polyamide selon l'une quelconque des revendications 1 à 12, qui contient de l'acide 1,4-cyclohexanedicarboxylique pour l'acide dicarboxylique aliphatique, et dans lequel le rapport de l'isomère trans dérivé de l'acide 1,4-cyclohexanedicarboxylique est de 50 % à 100 %.

14. Fil multifilament de polyamide selon l'une quelconque des revendications 1 à 13, dans lequel la température de pic de la tangente de perte (tan$\delta$), mesurée comme décrit dans la description, est de 150°C à 200°C.

15. Fil multifilament de polyamide selon l'une quelconque des revendications 1 à 14, lequel est traité avec une résine de résorcine-formaline-latex.

16. Câble de pneumatique comprenant le fil multifilament de polyamide selon l'une quelconque des revendications 1 à 15.

17. Câble torsadé constitué du fil multifilament de polyamide selon l'une quelconque des revendications 1 à 14.

18. Câble torsadé selon la revendication 17, qui est traité avec une résine de résorcine-formaline-latex.

19. Câble torsadé constitué du fil multifilament de polyamide selon la revendication 15.

20. Textile de câble constitué du fil multifilament de polyamide selon l'une quelconque des revendications 1 à 14 ou du câble torsadé selon la revendication 17.

21. Textile de câble selon la revendication 20, lequel est traité avec une résine de résorcine-formaline-latex.

22. Textile de câble constitué du fil multifilament de polyamide selon la revendication 15 ou du câble selon la revendication 18 ou 19.

23. Pneumatique comprenant le fil multifilament de polyamide selon l'une quelconque des revendications 1 à 15, le câble selon l'une quelconque des revendications 16 à 19, ou le textile de câble selon l'une quelconque des revendications 20 à 22.

24. Pneumatique selon la revendication 23, dans lequel le fil multifilament de polyamide selon l'une quelconque des revendications 1 à 15, le câble selon l'une quelconque des revendications 17 à 20, ou le textile de câble selon l'une quelconque des revendications 20 à 22 est appliqué à un pli de chape.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1247204 B
- JP 2001063310 A
- JP 2011052361 A